(19) Europäisches Patentamt
European Patent Office
Office européen des brevets

(11) EP 4 762 929 A1

(12) # EUROPEAN PATENT APPLICATION

(43) Date of publication:
**24.06.2026 Bulletin 2026/26**

(21) Application number: **25216345.6**

(22) Date of filing: **17.11.2025**

(51) International Patent Classification (IPC):
***A21D 13/20*** (2017.01) ***A21D 13/30*** (2017.01)
***A21D 13/38*** (2017.01) ***A23D 7/00*** (2006.01)
***A23D 7/005*** (2006.01) ***A23D 9/00*** (2006.01)
***A23D 9/007*** (2006.01) ***A23G 1/30*** (2006.01)
***A23G 3/34*** (2006.01) ***A23G 3/36*** (2006.01)
***A23G 3/40*** (2006.01) ***A23G 3/48*** (2006.01)
***A23L 5/43*** (2016.01) ***A23L 29/00*** (2016.01)
***A23L 29/10*** (2016.01) ***A23L 29/30*** (2016.01)

(52) Cooperative Patent Classification (CPC):
**A21D 13/20; A21D 13/30; A21D 13/38; A23D 7/003; A23D 7/0053; A23D 9/00; A23D 9/007; A23G 1/305; A23G 3/343; A23G 3/36; A23G 3/40; A23G 3/48; A23L 5/43; A23L 29/04; A23L 29/10;** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.12.2024 US 202463735461 P**
**24.12.2024 EP 24223149**

(71) Applicant: **GNT Group B.V.**
**5731 HR Mierlo (NL)**

(72) Inventors:
- **ZHENG, Bingjing**
**MIERLO (NL)**
- **MACDONALD, Jane Lee**
**MIERLO (NL)**

(74) Representative: **Algemeen Octrooi- en Merkenbureau B.V.**
**P.O. Box 645**
**5600 AP Eindhoven (NL)**

(54) **FAT-BASED COMPOSITION CONTAINING ANTHOCYANIN-BASED COLORANT**

(57) The present invention provides a fat-based composition comprising a fat-blend, a sweetener, an emulsifier and an anthocyanin-based colorant, further comprising an antioxidant. The present invention also provides the use of a fat-based composition in edible products such as in a icing, coating, frosting or fondant to be applied on an edible product, or a filling to be used in an edible product.

EP 4 762 929 A1

(52) Cooperative Patent Classification (CPC): (Cont.)
**A23L 29/30;** A23G 2200/14

## Description

FIELD OF INVENTION

The present invention relates to a fat-based composition comprising a fat blend, a sweetener, an emulsifier composition and an anthocyanin-based colorant. The invention further relates to the use of a fat-based composition in an icing, coating, frosting, or compound chocolate or as a filling in an edible product.

BACKGROUND OF THE INVENTION

Color is one of the most decisive factors that directly influences a customer's food selection within the food industry. In recent years natural colorants have started to play a crucial role in providing the desired color in fat-based compositions, such as frostings and fillings, that are, for instance, applied onto baked goods, to make them more attractive and appetizing.

Anthocyanins are a well-known group of such natural colorants, giving color to food products. Anthocyanins are water soluble, non-toxic pigments with several health benefits. They are extracted from fruits and vegetables and have been used widely in food colorants to provide colors from pink, red, purple to blue.

Previously, it has been found that anthocyanins fade quickly or shift color hue in most commercial fat-based applications, such as frostings or compound chocolate. The degree of fading varies based on the type of commercial fat and emulsifier used in the frosting.

Several solutions have been proposed to stabilize the color of anthocyanin-based colorants. US2022240553A1 discloses colorant particles of an anthocyanin-based extract from red sweet potato. The mean particle diameter of the colorant particles provides good suspension stability. An oil-based colorant composition comprising said particles is provided, as is a food product comprising the oil-based colorant composition.

There is a need in the food industry for an effective, commercially viable, and preferably natural way of stabilizing anthocyanins in fat-based compositions that are used, for instance in baked goods.

SUMMARY OF THE INVENTION

In the first aspect, the present invention provides a fat-based composition comprising a fat blend, a sweetener, an emulsifier composition, and an anthocyanin-based colorant, wherein the fat blend comprises triglycerides,

> wherein the triglycerides comprise at least 40 wt.% C12 to C20 fatty acid residues, and wherein the triglycerides comprise at least 40 wt.% saturated fatty acid residues,
> based on the total weight of fatty acid residues in the triglycerides; and

wherein the emulsifier composition comprises a primary emulsifier which has an HLB value of less than 9; and

> wherein the primary emulsifier comprises C14 to C20 fatty acid residues,
> wherein at least 40 wt.% of the C14 to C20 fatty acid residues in the primary emulsifier are saturated fatty acid residues, based on the total weight of fatty acid residues in the primary emulsifier.

In a second aspect, the present invention provides a use of a fat-based composition in an icing, coating, frosting, or compound chocolate or as a filling or crème filling to be used in an edible product.

The inventors have surprisingly discovered that using certain combinations of emulsifiers and fats in fat-based compositions results in the improvement of anthocyanins' stability in both light and dark conditions, promoting the color retention of these compositions. It was further discovered that addition of antioxidants to the fat-based composition comprising an emulsifier composition and fats, also has a positive effect on the stability of anthocyanin, and hence color retention.

The invention offers a commercially viable natural solution for stabilizing anthocyanins in fat-based compositions, which is highly valuable for food manufacturers. This enables the use of anthocyanins to color for example, baked goods comprising frostings, providing them with a longer shelf life and less color fading. Further, if the fat-based composition is used in a compound chocolate, it provides the advantage that the color hue does not shift.

DEFINITIONS

The term "comprising" has its conventional meaning throughout this application and implies that the product, process or the like must have the components listed, but that other, unspecified components may be present in addition.

The term "fat" refers to glyceride fats and oils containing fatty acid acyl groups and, unless otherwise indicated, does not imply any particular melting point. The term "oil" is used synonymously with "fat". Fats predominantly comprise triglycerides.

The term "fatty acid residue", as used herein, refers to straight chain saturated or unsaturated (including mono- and polyunsaturated) carboxylic acids having 12 to 20 carbon atoms. The term is used herein to refer to the carboxylic acid residues bound to the glycerol moiety as acyl groups in glycerides. A fatty acid residue having n carbon atoms and x double bonds may be as denoted Cn:x. For example, palmitic acid may be denoted as C16:0 and oleic acid may be denoted as C18:1.

Percentages of fatty acid residues in compositions referred to herein include acyl groups in tri-, di- and mono-glycerides present in the triglycerides as is customary terminology in the art and are based on the total weight of fatty acid residues. The fatty acid residue profile (i.e., composition) may be determined, for example, by fatty acid methyl ester analysis (FAME) using gas chromatography according to ISO 15304.

DETAILED DESCRIPTION

As described above, the present invention provides a fat-based composition comprising a fat blend, a sweetener, an emulsifier composition, and an anthocyanin-based colorant. The fat-based composition may further comprise an antioxidant and/or water.

Fat blend

The fat-based composition of the invention comprises a particular fat blend. One of the effects of the use of the fat blend is to ensure that the fat-based composition is mostly solid at ambient temperature. In particular, the melting point of the fat blend is at least 24 °C. The melting point applies to the fat blend as a whole (single source or mixture of different sources) and can be determined by methods known in the art, such as the capillary tube method, differential scanning calorimetry (DSC), or nuclear magnetic resonance (NMR) spectroscopy.

The fat blend comprises triglycerides,

wherein the triglycerides comprise at least 40 wt.% C12 to C20 fatty acid residues,
and wherein the triglycerides comprise at least 40 wt.% saturated fatty acid residues, based on the total weight of fatty acid residues in the triglycerides.

According to a preferred aspect, the triglycerides comprise at least 50 wt.% saturated fatty acid residues, based on the total weight of fatty acid residues in the triglycerides. According to another aspect, the triglycerides comprise at least 50 wt.% C12 to C20 fatty acid residues.

Preferably, the C12 to C20 fatty acid residues comprises at least 30 wt.% C12:0, C14:0, C16:0, C18:0 fatty acid residues or a combination thereof. In an aspect the C12 to C20 fatty acid residues comprise at least 50 wt.%, or even at least 70 wt.% .% C12:0, C14:0, C16:0, C18:0 fatty acid residues or a combination thereof. The C12 to C20 fatty acid residues may comprises up to a 100 wt.% C12:0, C14:0, C16:0, C18:0 fatty acid residues or a combination thereof.

Fats that contain triglycerides comprising predominantly C12:0 fatty acid residues (lauric acid) are palm kernel oil, laurel oil, and coconut oil. Fats that contain triglycerides comprising predominantly C16:0 fatty acid residues (palmitic acid) are palm oil, butter and milk fat. Fats that contain triglycerides comprising predominantly C18:0 fatty acid residues are cocoa butter and hydrogenated and interesterified vegetable oils. Here vegetable oils are extracted from fruits, seeds, nuts, and grains that contain majority unsaturated C18 fatty acids. Hydrogenated and interesterified vegetable oils may be sourced from soybean, cottonseed, corn, sunflower, safflower, canola, coconut, olive, peanut, and/or palm. Among these, soybean is preferred.

Particularly preferred fats to use in the fat-blend in the invention are coconut oil, palm oil, hydrogenated vegetable oils and interesterified vegetable oils. The fat-blend may also comprise a combination of one or more of these fats.

Preferably, the fat blend comprises coconut oil, palm kernel oil, laurel oil, palm oil, butter, cacao butter, milk fat, hydrogenated vegetable oil, interesterified vegetable oil, or a combination thereof. The fat-blend of the present invention may comprise coconut oil. Coconut oil is an edible oil derived from the white outer flesh of the coconut palm fruit. Coconut oil generally has a high saturated fatty acid content. Coconut oil has a melting point of around 24 °C.

The coconut oil of the present invention comprises saturated and mono- and poly-unsaturated fatty acids. Among the saturated fatty acid residues, the coconut oil of the present invention comprises: 0-7 wt.% capric acid (C10:0), 46-51 wt.% lauric acid (C12:0), 8-21 wt.% myristic acid (C14:0), 7-11 wt.% palmitic acid (C16:0) and 2-4 wt.% stearic acid (C18:0). Among the mono- and poly-unsaturated fatty acids, the coconut oil of the present invention comprises: 0-6 wt.% oleic acid (C18:1) and 0 -2 wt. % linoleic acid (w6, 18:2). These wt.% are based on the total weight of C10 to C18 fatty acid residues.

The fat-blend of the present invention may comprise palm oil. Palm oil is an edible oil derived from the flesh fruit of a palm tree. Palm oil has a balanced fatty acid composition between saturated fatty acids and unsaturated fatty acids. The major fraction of saturated fatty acids consists of palmitic acid. Palm oil has a melting point of around 35 °C.

The palm oil of the present invention comprises saturated and mono-unsaturated and poly-unsaturated fatty acids. Among the saturated fatty acids, the palm oil of the present invention comprises 0-1 wt.% myristic acid (C14:0), 40-45 wt.% palmitic acid (C16:0) and 1-5 wt.% stearic acid (C18:0). Among the mono- and poly-unsaturated fatty acids, the palm oil of the present invention comprises 40% oleic acid (C18:1) and 10 wt.% linoleic acid (w6, C18:2). These wt.% are based on the total weight of C10 to C18 fatty acid residues.

The fat blend of the present invention may comprise an interesterified vegetable oil. Interesterification is a method of rearranging and redistributing the fatty acid on the glycerol fragment of an oil molecule. The rearrangement and redistribution do not change the overall composition of the fatty acids on the starting materials.

The interesterified fat blend may be chemically or enzymatically interesterified. Chemical interesterification is a process by which fatty acids are randomly redistributed across the glycerol backbone of the triglyceride. This process is carried out by drying the starting material and adding an interesterification catalyst, such as sodium methoxide, or another acid or base catalyst. Enzymatic interesterification is another means by which oils and fats can be modified. This process uses most commonly immobilized lipases to rearrange the fatty acids on the glycerol backbone of the triglyceride. There are immobilized lipases that can target fatty acids at specific positions on the glycerol backbone, therefore, the rearrangement of fatty acids during such an enzymatic interesterification can be less random than with chemical interesterification.

A preferred interesterified vegetable oil is interesterified soybean oil. Interesterified soybean oil combines liquid vegetable oil with fully hydrogenated soybean oil. The interesterified soybean oil as part of the fat-blend of the present invention comprises saturated, mono- and poly-unsaturated fatty acids. Among the saturated fatty acids, the interesterified soybean oil of the present invention comprises 9-11 wt.% palmitic acid (C16:0) and 41- 47 wt.% stearic acid (C18:0). Among the mono- and polyunsaturated fatty acids the interesterified soybean oil of the present invention comprises 8.5 -15 wt.% oleic acid (C18:1), 24-29 wt.% linoleic acid (w6, C18:2) and 2-5.5 wt.% alpha-linoleic acid (w3, C18:3). These wt.% are based on the total weight of C10 to C18 fatty acid residues.

The fat blend of the present invention may comprise a fully hydrogenated vegetable oil. Hydrogenation is a chemical process where hydrogen is added to the oil, that contains mono- or/and polyunsaturated fatty acids, with a metal catalyst, or without a catalyst under heat and/or pressure. This process causes the unsaturated fatty acid of oil to become saturated, by reducing the double or triple bonds of the fatty acid to a single hydrocarbon bond without changing the carbon chain length of the fatty acid.

A preferred hydrogenated vegetable oil is hydrogenated soybean oil. The hydrogenated soybean oil comprises 79-92 wt.% stearic acid (C18:0) and 9-13 wt.% palmitic acid (C16:0). These wt.% are based on the total weight of C10 to C18 fatty acid residues.

Emulsifier composition

The emulsifier composition in the fat-based composition comprises one or more emulsifiers that are food grade. The one or more emulsifiers may be a nonionic or anionic surfactant having both hydrophilic and lipophilic characteristics. In other words, it is dispersible in both water and oil or fat. The hydrophilic and lipophilic characteristics of an emulsifier can be defined by its hydrophobic lipophilic balance (HLB). It is calculated from the weight percentage of the hydrophilic groups to the hydrophobic groups in a molecule. The HLB scale ranges from 0 to 20. In the range of approximately 0 to 6, emulsifiers are hydrophobic (oil-soluble), in the range of 6 to 9, they are water dispersible, and in the range of approximately 9.5 to 20, they are hydrophilic (water-soluble).

The emulsifier composition of the present invention comprises a primary emulsifier.

For use in the present invention, the HLB of the primary emulsifier is less than 9. Preferably, the HLB value of the primary emulsifier is at least 3.

The inventors found that a primary emulsifier that comprises C14 to C20 fatty acid residues, wherein at least 40 wt.% of the C14 to C20 fatty acid residues in the primary emulsifier are saturated fatty acid residues, based on the total weight of fatty acid residues in the primary emulsifier, is particularly suitable for the purpose of the present invention. Such emulsifiers are known in the art. They may be obtained by chemical or biological processes.

Preferably, the C14 to C20 fatty acid residues comprise at least 30 wt.% C14:0, C16:0, C18:0 fatty acid residues or a combination thereof. In an aspect the C14 to C20 fatty acid residues comprise at least 50 wt.%, or even at least 70 wt.% .% C14:0, C16:0, C18:0 fatty acid residues or a combination thereof. The C14 to C20 fatty acid residues may comprises up to a 100 wt.% C14:0, C16:0, C18:0 fatty acid residues or a combination thereof.

In a preferred aspect, the primary emulsifier comprises C16 or C18 saturated fatty acid residues, in particular C16:0 or C18:0 fatty acid residues, or a combination thereof.

The primary emulsifier is preferably a mono or diglyceride, a glycerol fatty acid ester, sorbitan fatty acid ester, or

ascorbyl fatty acid ester comprising fatty acid residues as described above. More preferably, the primary emulsifier is a mono- or diglyceride comprising C16:0 fatty acid residues, ascorbyl palmitate, glycerol stearate, sorbitan stearate.

As will be shown in the example, the primary emulsifier of the invention has a stabilizing effect on the color of the fat-based composition, contrary to emulsifiers that may conventionally be used. The emulsifier composition may contain other emulsifiers beside the primary emulsifier. It is preferred that the emulsifier composition contains a minor amount of emulsifiers that may have a negative effect on the color stability of anthocyanins such as emulsifiers that comprise unsaturated fatty acids, fatty acids having a chain length C12 or less, and an HLB value of 11 or higher, for example soy lecithin, monolaurin, glycerol monooleate, Polysorbate 60, or Polysorbate 80.

The emulsifier composition may contain at least 40 wt.% of the primary emulsifier, or at least 50 wt.% of the primary emulsifier, or at least 60 wt.% of the primary emulsifier, or at least 70 wt.%, or at least 80 wt.% of the primary emulsifier, or even 95, 99 or 100 wt.% of the primary emulsifier, based on the weight of the emulsifier composition.

The amount of emulsifier composition with respect to the fat blend in the fat-based composition is from 0.5 to 10 wt.% based on the combined weight of emulsifier composition and fat blend, preferably from 0.7 to 5 wt.% based on the combined weight of emulsifier composition and fat blend.

Anthocyanin-based colorant

The fat-based composition according to the present invention comprises an anthocyanin-based colorant. Anthocyanins are a subgroup of flavonoids and are commonly found in the cell vacuole of fruits, vegetables, and flowers, but can exist in leaves, stems, and roots of plants. Plants rich in anthocyanins include acai, blackcurrant, aronia (chokeberry), blackberry, raspberry, blueberries, cherry, red currant, black rice, purple corn, black carrot, purple carrot, blue corn, red cabbage, purple sweet potato, red sweet potato, Concord grape, red radish, hibiscus, butterfly pea flower, and many other highly colored plants. Anthocyanin-based colors range in hue from pink, red, purple to blue.

More than 500 anthocyanins (Sudhakar 2016) have been discovered. They may generally be represented by Formula I:

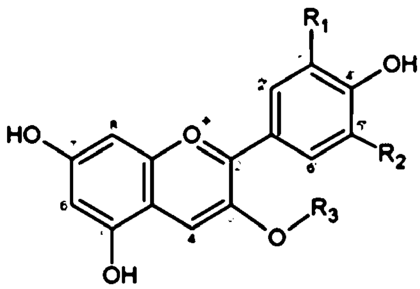

Formula I

Anthocyanins are composed of saccharides, mostly 3-glycosides and 3,5 glycosides. Saccharides may include glucose, rhamnose, xylose, galactose, arabinose, rutinose, and more complex glycosides. The saccharides may be esterified with aliphatic and aromatic compounds. The different saccharide groups, varying in positions, and degree of acylation, have an impact on color hue and stability (Kammerer 2016). As an example, three major anthocyanins identified in black carrot (Montilla 2011) by HPLC-MS are cyanidin 3-xylosyl (sinapoylglucosyl) galactoside, cyanidin 3-xylosyl(feruloylglucosyl) galactoside, and cyanidin 3-xylosyl(coumaroylglucosyl) galactoside.

The saccharide-free counterparts to anthocyanins are anthocyanidins, with the six most common being cyanidin, delphinidin, malvidin, pelargonidin, peonidin and petunidin (See Table 1), referring to $R_1$ and $R_2$ in Formula I. The anthocyanin equivalents of these anthocyanidins will have a saccharide moiety at the $R_3$ position in Formula I.

*Table 1: Six Primary Anthocyanindins*

| Anthocyanidin | R1 | R2 | Chemical Formula | Molecular Weight (g/mol) | Max Absorbance ($\lambda_{max}$ (nm))* | Food sources |
|---|---|---|---|---|---|---|
| Pelargonidin | H | H | $C_{15}H_{11}O_5Cl$ | 306.7 | 520 nm | Strawberry, blueberry, potato and radish |
| Peonidin | OCH3 | H | $C_{16}H_{13}O_6Cl$ | 336.7 | 532nm | Grape, potato and plum |
| Cyanidin | OH | H | $C_{15}H_{11}O_6Cl$ | 322.6 | 535nm | Plum, red onions, red cabbage and purple carrot |

(continued)

| Anthocyanidin | R1 | R2 | Chemical Formula | Molecular Weight (g/mol) | Max Absorbance ($\lambda_{max}$ (nm))* | Food sources |
|---|---|---|---|---|---|---|
| Petunidin | OH | OCH3 | $C_{16}H_{13}O_7Cl$ | 352.7 | 543nm | Blueberry and grape |
| Malvidin | OCH3 | OCH3 | $C_{17}H_{15}O_7Cl$ | 366.7 | 542nm | Blueberry and grape |
| Delphinidin | OH | OH | $C_{15}H_{11}O_7Cl$ | 340.6 | 546nm | Eggplant, pomegranate, blueberry, grape and butterfly pea |
| * Spectrophotometry maximum ($\lambda_{max}$ (nm)) in methanol with 0.01% concentration HCl *Commission Regulation for European Union published specification and quantification assay for anthocyanins (E163) in No 231/2012* of 9 *March 2012* | | | | | | |

The anthocyanin-based colorant may be a concentrate from anthocyanin-containing plants, in particular edible fruits and vegetables. Preferably, the anthocyanin-based food colorant is a concentrate from one or more of black carrot, purple carrot, purple sweet potato, hibiscus, radish, red sweet potato, grape, aronia, blueberry and elderberry. More preferably, the anthocyanin-based colorant is a concentrate from one or more of radish, black carrot, purple carrot, purple sweet potato, red sweet potato.

The anthocyanin-based concentrates from plants are known to the skilled person. They may be obtained from an extract or a juice of plant raw material. A juice or extract can be prepared by first crushing, shredding, chopping, or grinding the plant's raw material, to obtain smaller pieces of the plant, e.g. several centimeters or millimeters. This process may also comprise a step of (steam) peeling.

In the case of a juice, the crushed raw material is pressed to obtain a juice from the raw material. In case of an extract, the crushed raw material is contacted with an aqueous composition to obtain an extract. The aqueous composition to obtain the extract can be selected from water and water containing processing aids.

The process to obtain the concentrate can further comprise steps known in the art, such as centrifugation, filtration or decanting, for instance to remove fibers and other water-insoluble components. In the process, processing aids can be used such as citric acid, ascorbic acid and lactic acid and/or technological aids such as enzymes.

The concentrate can be enriched with known technologies such as membrane filtration, fermentation and chromatography. The concentrate can be in liquid form, e.g. a solution or dispersion in water, or can be in solid form, e.g. a powder. The concentrate may consist of 55-95 wt.% dry matter. The concentrate can be dried by methods known in the art, such as by freeze drying, spray drying infrared drying or belt drying.

The concentrate thus obtained may comprise from 0.3 to 20 wt.% anthocyanins based on dry weight of the concentrate, preferably at least 0.5 wt.% anthocyanins. The concentrate will generally comprises up to 15 wt.% anthocyanins, in particular up to 10 wt.%, or even up to 5 wt.%. Quantitative analysis can be carried out by methods known in the art such as high-performance liquid chromatography, colorimetry or photometric analysis.

Further components in the concentrate are those obtained from the plant, e.g. sugars, proteins, minerals, organic acids, vitamins, sterols, purines and phenolic compounds. It can also be envisaged to remove some of these components, e.g. sugars and proteins, in the process of preparing the concentrate.

The total anthocyanin content in anthocyanin-based color concentrates varies by manufacturers and may range in color strength $E^{1\%}_{1cm}$ from 0.1 to 200 at pH 3.0. $E^{1\%}_{1cm}$ refers to the absorbance of a 1 cm layer of a solution whose concentration is 1 wt.% at a specified wavelength.

Antioxidant

The fat-based composition according to the invention may further comprise an antioxidant. Antioxidants are synthetic or natural substances that prevent or delay the oxidative deterioration of a compound (anthocyanin in the instance of the present invention). Exemplary antioxidants include tocopherols, flavonoids, catechins, superoxide dismutase, lecithin, gamma oryzanol, vitamins, such as vitamins A, C (ascorbic acid) and E (comprising tocopherols) and beta-carotene. The antioxidants may also be provided as a plant extract, for instance rosemary extract, green tea extract, green coffee extract or grapeseed abstract.

Rosemary extract contains components such as rosmarinic acid, carnosic acid, carnosic acid, caffeic acid, and ursolic acid. Spearmint extract contains rosmarinic acid and other potential antioxidants, such as limonene, menthol, quercetin, etc. Other known natural antioxidants, such as epigallocatechin-3-gallate (EGCG) and catechins can be found in green tea extract; chlorogenic acid and caffeic acid are commonly found in green coffee extract; and the proanthocyanidin is the main active ingredient in grapeseed extract.

According to an aspect, the fat-based composition of the present invention may comprise an antioxidant selected from tert-butylhydroquinone (TBHQ), rosmarinic acid, tocopherol, ascorbyl palmitate, and combinations thereof.

Rosmarinic acid exists in many herbal flavoring foods, including rosemary, basil, lemon balm, sage, and peppermint. Of these, preferably, rosemary extract is used.

Ascorbyl palmitate is particularly preferred as an antioxidant since it provides both emulsifying and color stabilizing effects. When ascorbyl palmitate is used for its antioxidant properties, it is preferably combined with another emulsifier, selected from the primary emulsifiers described above.

Sweetener

Sweeteners in the fat-based composition may be both natural and synthetic sweeteners. Natural sweeteners and synthetic sweeteners have the same purpose: to act as a sweet flavor while adding little to no calories to the diet (Carle & Schweiggert, 2016). Examples of natural sweeteners include sucrose, glucose, fructose, lactose, maltose, galactose, corn syrup, trehalose and high fructose corn syrup. Examples of artificial sweeteners include erythritol, xylitol, maltitol, stevia, monk fruit, allulose, aspartame, saccharin, sucralose, neotame and acesulfame potassium.

According to an aspect, the sweeteners of the fat composition of the present invention are selected from sucrose, glucose, fructose, lactose, maltose, galactose, corn syrup, trehalose, high fructose corn syrup, erythritol, xylitol, maltitol, allulose, stevia, monk fruit, aspartame, saccharin, sucralose, neotame, acesulfame potassium and combinations thereof. Preferred sweeteners are sucrose, glucose, and fructose.

Composition

According to an embodiment, the fat-based composition of the present invention comprises:

10-70 wt.% of the fat blend,
1-80 wt.% of the sweetener,
0.01-10 wt.% of the emulsifier composition
and 0.01-5 wt.% of the anthocyanin-based colorant

based on the total weight of the fat-based composition.

The fat-based composition may further comprise 0.01-5 wt.% of the antioxidant described above. The composition may also comprise 0.01-10 wt.% water.

The fat-based composition may further comprise further additives, such as preservatives, flavoring and pH regulating agents, for example, potassium sorbate and citric acid.

Examples of typical fat based compositions are:

*Cookie filling*

50-70 wt.% sugar
35-45 wt.% fat blend
0.1-0.3 wt.% salt
0.01-5 wt.% anthocyanin based colorant
0.1-5.0 wt.% emulsifier composition

*White icing base*

55-75 wt.% sugar
22-32 wt.% fat blend
2-3 wt.% corn syrup
2.2-3.2 wt.% water
0.3-0.5 wt.% salt
0.05-0.15 wt.% citric acid
0.01-5 wt.% anthocyanin based colorant
0.1-3.5 wt.% emulsifier composition

*Low density butter crème icing (cake icing/filling)*

38-58 wt.% sugar
40-60 wt.% fat blend
1.0-2.0 wt.% water
0.1-0.3 wt.% potassium sorbate
0.15-0.35 wt.% citric acid
0.01-5 wt.% anthocyanin based colorant
0.1-10 wt.% emulsifier composition

*High density frosting*

60-80 wt.% sugar
15-25 wt.% fat blend
7.5-9.5 wt.% water
0.1-0.3 wt.% potassium sorbate
0.05-0.25 wt.% citric acid
0.01-5 wt.% anthocyanin based colorant
0.1-3.0 wt.% emulsifier composition

*Canned frosting*

60-80 wt.% sugar
10-15 wt.% fat blend
7.5-12.5 wt.% water
1.0-3.0 wt% corn syrup
0.07-0.20 wt.% potassium sorbate
0.05-0.25 wt.% citric acid
0.10-0.20 wt.% salt
0.25-0.75 wt.% hydrocolloid mixture
0.01-5 wt.% anthocyanin based colorant
0.1-2.0 wt.% emulsifier composition

*White compound chocolate*

30-60 wt.% sugar
20-50 wt.% fat blend
5-20 wt.% milk powder
0.1-0.5 wt.% flavor (vanilla)
0.01-5 wt.% anthocyanin based colorant
0.1-0.5 wt.% emulsifier composition

The emulsifier composition in the white compound chocolate may contain 30-70 wt.% of a primary emulsifier, such as ascorbyl palmitate and 30-70 wt.% other emulsifier such as (soy) lecithin.

Stability

The fat-based composition of the invention in particular has a light stability defined as (redness) color loss, of less than 60% after 2 weeks of ambient light storage or 3 months of ambient dark storage. It further has a light stability defined as ΔE of less than 10 after 2 weeks of ambient light storage or 3 months of ambient dark storage. The methods of determining light stability are described hereafter in the methods section.

Method of preparation

The invention thus also relates to a method of preparing the fat-based composition. The method may comprise blending the fat blend, sweetener, emulsifier composition, anthocyanin-based colorant and any further ingredients. The method may also comprise melting the fat blend and mixing the melted fat blend with the emulsifier composition, adding the sweetener to the mix of fat-blend and emulsifier composition and further dosing the anthocyanin-based colorant, followed by cooling.

Uses

The fat-based compositions of the present invention are typically used in an icing, coating or frosting which may be applied on an edible product or as a filling to be used in an edible product. Edible products may be baked products, specifically bakery products such as cakes or cookies. An icing, frosting or coating will typically be applied on the top or on multiple sides of such an edible product. Bakery products can be uncooked, heated, cooked, or baked. Bakery products include cookies, pies, turnovers, pastries, biscuits, fudges, and cakes, such as cupcakes. Compound chocolate may be an edible product or may be used to coat bakery or snacks products such as pretzels, popcorn, or candy.

DESCRIPTION OF THE DRAWINGS

Figure 1: Comparison of the color retention (%) of anthocyanin frostings comprising coconut oil as the fat source across different emulsifiers in ambient light and ambient dark conditions. In the figures* indicates data collected at 1-week light, and 2- week Dark; ** indicates data collected at 4-day light, and 4-day Dark; *** indicates data collected at 2-day light, and 2-day Dark; unmarked means data measured at 2 weeks in light and 3 months in dark.

Figure 2: Comparison of the color retention (%) of anthocyanin frostings comprising palm oil as the fat source across different emulsifiers in ambient light and ambient dark conditions. In the figure * indicates data collected at 1-week light, and 2- week Dark; ** indicates data collected at 4-day light, and 4-day Dark; *** indicates data collected at 2-day light, and 2-day Dark; unmarked means data measured at 2 weeks in light and 3 months in dark.

Figure 3: Comparison of the color retention (%) of anthocyanin frostings comprising interesterified soybean oil as the fat source across different emulsifiers in ambient light and ambient dark conditions. In the figure, * indicates data collected at 1-week light, and 2- week Dark; ** indicates data collected at 4-day light, and 4-day Dark; *** indicates data collected at 2-day light, and 2-day Dark; unmarked means data measured at 2 weeks in light and 3 months in dark.

Figure 4: Comparison of the color retention (%) of anthocyanin frostings comprising coconut oil as the fat source and mono-diglyceride as the emulsifier across different antioxidants in ambient light and ambient dark conditions.

Figure 5: Comparison of the color retention (%) of anthocyanin frostings comprising palm oil as the fat source and mono-diglyceride as the emulsifier in ambient light and ambient dark conditions; * Means the measured at 4 days after dark and light storage.

Figure 6: Comparison of the color retention (%) of anthocyanin frostings comprising interesterified soybean oil as the fat source, and mono-diglyceride as the emulsifier across different antioxidants in ambient light and ambient dark conditions.

Figure 7: Comparison of the color retention (%) of anthocyanin frostings comprising coconut oil as the fat source and ascorbyl palmitate as the antioxidant across different emulsifiers in ambient light and ambient dark conditions. In the figure, * indicates data collected at 2-week light and 1 month Dark; ** indicates data collected at 1-week light and 2-week Dark; *** indicates data collected at 4-day light and 4-day Dark; unmarked means data measured at 2 weeks in light and 3 months in dark.

Figure 8: Comparison of the color retention (%) of anthocyanin frostings comprising palm oil as the fat source and ascorbyl palmitate as the antioxidant across different emulsifiers in ambient light and ambient dark conditions. In the figure, * indicates different data measurement day. * indicates data collected at 2-week light and 1 month Dark; ** indicates data collected at 1-week light and 2-week Dark; *** indicates data collected at 4-day light and 4-day Dark; unmarked means data measured at 2 weeks in light and 3 months in dark.

Figure 9: Comparison of the color retention (%) of anthocyanin frostings comprising interesterified soybean oil as the fat source and ascorbyl palmitate as the antioxidant across different emulsifiers in ambient light and ambient dark conditions. In the figure, * indicates different data measurement day. * indicates data collected at 2-week light and 1 month Dark; ** indicates data collected at 1-week light and 2-week Dark; *** indicates data collected at 4-day light and 4-day Dark; unmarked means data measured at 2 weeks in light and 3 months in dark.

MEASUREMENTS

Color strength anthocyanins $E^{1\%}_{1cm}$

The quantification assay for anthocyanins is $E^{1\%}_{1cm}$ as listed for E163 in EU Regulation No 231/2012 of 9 March 2012. The assay listed is

$$\text{Color Strength } (E^{1\%}_{1cm}) = \text{Abs x DF x } 1\%$$

where Abs equals the peak max absorbance of the test solution within a wavelength range between 515-545 nm in commercial pH 3.0 buffer. DF equals the dilution factor so that the test solution has an absorbance between 0.3 - 0.7.

Absorbance is measured in a 1 cm pathlength cell in a Perkin Elmer 35 UV/VIS spectrophotometer.

L*a*b* values and color measurements

The colour hue of the present composition is determined using a spectrophotometer according to the CIELAB and CIELCH colour models. In this methodology, spectrophotometer measurements provide a numerical representation of colour based upon Opponent Colour Theory where CIELAB L*a*b*C*h values are calculated from the spectral data:

L*: Light vs. Dark where a low number (0-50) indicates Dark and a high number (51-100) indicates Light.
a*: Red vs. Green where a positive number indicates Red and a negative number indicates Green.
b*: Yellow vs. Blue where a positive number indicates Yellow and a negative number indicates Blue.
C* : describes chroma, starting from the center - 0 - and increases according to the distance from the center. C* provides a scale from achromatic, i.e., neutral white, gray, or black, at the L* axis (0 C* units) to greater purity of hue as the coordinate moves away from the L* axis (up to 100 or more C* units).
h: describes the hue as an angle expressed in degrees, starting from 0° at the a* axis (red), 90° +b* (yellow), 180° -a* (green) and 270° -b* (blue).

To determine the spectral and color properties further defined in the methods below, a spectrophotometer (Hunterlab UltraScan Vis spectrometer) is used in reflectance mode to record the absorbance from 360 to 780 nm. Colorimetric parameters (color properties) are calculated in CIE L*a*b* color system.

Color stability upon storage

A clear 20 ml PET jar containing colored frosting is stored at ambient light and dark conditions at room temperature. The ambient light environment contains an LED light that emits a flux of 1000 lux, whereas the dark environment does not contain any light source.

Color values (L, a*, and b*) are determined according to the method above. The lid of the jar was removed and placed in front of the port area of the spectrophotometer. A black cover was used to cover the sample during the measurement. The a* value is used to determine the color of anthocyanin in these examples. The color retention, color loss, and ΔE value are calculated based on the a* value using the following three equations (Lindbloom, n.d.):

*Equation 1*

$$\% \text{ color loss} = 100 \text{ x } \left(1 - \frac{\text{a*value after storage}}{\text{Initial a*value}}\right)$$

*Equation 2*

$$\% \text{ color retention} = 100 \text{ x } \left(\frac{\text{a*value after storage}}{\text{Initial a*value}}\right)$$

*Equation 3*

$$\Delta E2000 = \sqrt{\left(\frac{\Delta L'}{K_L S_L}\right)^2 + \left(\frac{\Delta C'}{K_C S_C}\right)^2 + \left(\frac{\Delta H'}{K_H S_H}\right)^2 + R_T\left(\frac{\Delta C'}{K_C S_C}\right)\left(\frac{\Delta H'}{K_H S_H}\right)}$$

The result of the ΔE in Equation 3, gives a value between 0-100, which is the result based on the color differences in the L* C* H* color space. It considers the human eye's perceptual sensitivity to different colors.

*Table 2: Delta E values and their associated visual perception*

| Delta E | Visual Perception |
|---|---|
| <=1.0 | Not perceptible by human eyes |
| 1-2 | Perceptible through close observation |
| 2-10 | Perceptible at a glance |
| 11-49 | Colors are more similar than opposite |
| 100 | Colors are exact opposite |

Criteria of success

To be considered successful the frosting comprising the fat-based composition needed to prolong the stability of anthocyanin to 2 weeks at ambient light and 3 months in ambient dark, with the anthocyanin having a color loss of less than 60% with a ΔE of less than 10.

METHODS

Materials

*Anthocyanin source*

Red radish root powder, EXBERRY ®Shade Red-MN powder, was the anthocyanin source extracted from water, and the liquid extract was dried with maltodextrin and citric acid. The resulting juice was formulated with apple and black currant to obtain the standard color strength of the strength $E^{1\%}{}_{1cm}$ at pH 3.0 which equates to anthocyanin content of 3.33% or 33333.33 mg/kg.

*Fats*

Table 3: *Fats and their compositions*

| Fat | % C12 to C20 | % Saturated fatty acids | Predominant fatty acid composition |
|---|---|---|---|
| Coconut Oil | >90% | >90% | C12:0 |
| Palm Oil | >95% | >41 % | C16:0 |
| Interesterified Soybean Oil | >95% | >41 % | C18:0 |

*Emulsifiers*

Table 4: *Emulsifiers and their compositions*

| Emulsifier | HLB | % C14 to C20 | % Saturated fatty acids | Fatty acid length (# of carbons) |
|---|---|---|---|---|
| Sunflower Lecithin | 2-4 | 100% | 0% | 18 |
| Mono-, diglycerides | 3.6-4.2 | 100% | >40% | 16 |
| Polysorbate 60 (Tween® 60) | 14.9 | 100% | 100% | 16 |
| Polysorbate 80 (Tween® 80) | 14.9 | 100% | 0% | 18 |
| Glycerol monooleate | 3.5 | 100% | 0% | 18 |
| Monolaurin | 5.92 | 0% | 100% | 12 |
| Sorbitan monostearate (Span® 60) | 4.7 | 100% | 100% | 18 |

(continued)

| Emulsifier | HLB | % C14 to C20 | % Saturated fatty acids | Fatty acid length (# of carbons) |
|---|---|---|---|---|
| Ascorbyl palmitate | 8.4 | 100% | 100% | 16 |
| Glycerol monostearate | 4.2 | 100% | 100% | 18 |

As mentioned above, ascorbyl palmitate is commonly used as an antioxidant. However, since it contains a saturated fatty acid residue (C16:0) on this ascorbyl head, it is also considered an emulsifier in this invention. As will be shown below, the amount of ascorbyl palmitate in the composition depends on its use as emulsifier or antioxidant.

*Antioxidants*

Antioxidants used in this invention are typically in addition to the emulsifiers, such as tertiary butylhydroquinone (TBHQ), rosemary extract, tocopherol, and ascorbyl palmitate (AP).

*Other ingredients*

Powdered sugar, citric acid potassium sorbate, and water were used in model formulas.

Reference example: Anthocyanin colorant in the different chain length solid fat

In this section, anthocyanin stability in different chain lengths of fatty acid is investigated using the frosting system.

Method of solid fat frosting:

The anthocyanin-containing fat-based frosting of the Reference example is prepared using coconut oil, palm oil, or interesterified soybean oil as the fat blend. The fat was weighed into a Kitchen Aid (KitchenAid ® Stand Mixer) bowl and then mixed until the fat became light and fluffy. The icing sugar was slowly added with continuing mix. Then the water, potassium sorbate solution, and citric acid solution were dropped into the mixture by order. The samples then continued to mix for 2 more minutes at high speed until they became creamy and fluffy. The anthocyanin powder was then added to the blank frosting to make a homogenized pinky anthocyanin frosting. The samples were then deposited into the clear jar with the lid (20 mL) for light and dark storage. The recipe is listed below:

*Table 5: Recipe used in the preparation of the fat-based frosting*

| Ingredient | % Formula |
|---|---|
| Powdered sugar | 48 |
| Solid fat | 50 |
| Water | 1.5 |
| Potassium sorbate | 0.2 |
| Citric acid (granular) | 0.2 |
| Red raddish root powder | 0.1 |
| Total | 100 |

Discussion and results for Reference example

Initially, anthocyanin successfully dispersed in the different lengths of fatty acid solid fat prepared frostings to provide the creamy pinky color, including, coconut oil (C12:0), palm oil (C16:0), and interesterified soybean oil (C18:0). The shorter chain length fatty acid (coconut oil) prepared anthocyanin frosting showed a higher initial redness (a*) than the longer fatty acid (palm and interesterified soybean oil) prepared frosting (Table 6). However, the redness of the color in all the frostings faded within 1 week at ambient light and 2 weeks at ambient dark. Here, the redness in the C18 and C16 fatty acid-containing frosting faded within 2 and 4 days under light and dark. The C12 fatty acid-containing frosting exhibited

better color stability than the longer chain length-containing frosting, however, the color faded more than 90% after 1 week of light storage and 75% after 2 weeks of dark storage. Overall, the result indicates that anthocyanin was not stable in the plain solid fat-prepared frosting, regardless of the fatty acid chain length.

In the following tables indicates different data measurement days:

* Indicates data collected at 1 week light, and 2-week Dark
** Indicates data collected at 4-day light, and 4-day Dark
*** Indicates data collected at 2-day light, and 2-day Dark

*Table 6: Reference example; anthocyanin in different fat sources*

| **Fat source** | | **Coconut oil** | **Palm Oil** | **Interesterified soybean oil** |
|---|---|---|---|---|
| **Major fatty acid composition** | | **C12:0** | **C16:0** | **C18 :0** |
| Initial | L | 78.15 | 88.14 | 88.56 |
| | a* | 17.2 | 9.7 | 9.45 |
| | b* | 5.98 | 4.39 | 3.06 |
| Ambient Light | L | 95.4 | 92.1 | 95 |
| | a* | 1.44 | 1.98 | 0.04 |
| | b* | 4 | 4.5 | 2.4 |
| | % redness loss | 91.63% | 79.59% | 99.58% |
| | Delta E | 18.57 | 9 | 11.73 |
| Ambient Dark | L | 92.9 | 91.8 | 89.8 |
| | a* | 4.2 | 0.78 | 0.6 |
| | b* | 3.57 | 3.05 | 3.01 |
| | % redness loss | 75.58% | 91.96% | 94.18% |
| | Delta E | 13.26 | 10.39 | 10.37 |

EXAMPLES

Different emulsifiers

In this section, the effectiveness of combining emulsifiers in the solid fat on anthocyanin's stability in fat-based frosting is investigated. The emulsifiers are mono-, diglycerides, polysorbate 60, polysorbate 80, sunflower lecithin, glycerol monooleate, glyceryl monostearate (GMS), monolaurin, sorbitan monostearate (SMS), and ascorbyl palmitate. The chosen emulsifiers have varied chemical and physical characteristics in length and saturation of the fatty acid and hydrophobicity. Here, fatty acids of the emulsifiers contain 12 to 18 carbons with between 0 to 2 double bonds, and the HLB values are from 2 to 15. The emulsifiers used in these examples are listed in the Table 7.

Emulsifiers 2, 3, 4 and 5 and 7 (CE) are comparative examples. Examples 1, 6, 8, 9 and 10 concern primary emulsifiers according to the invention.

Preparation of the emulsified solid fat frosting was distributed into two procedures, including shortening preparation and frosting preparation.

For the shortening preparation, the solid fat was first melted in an oven (Memmert®, Universal Oven U) with a setting of 60 °C. The fat was melted to a liquid and added into a Vitamix (commercial food blender) with an emulsifier, and then blended with a speed of 8 for 5 min. The dosage of emulsifiers incorporated into the shortening varied. After the highspeed blending, the mixture was then cooled and stored in the refrigerator before use. The emulsified shortening was then incorporated with the rest of the frosting ingredients and color for frosting preparation, as the method described in the reference example. The prepared samples were also deposited into the clear jar with the lid (20mL) for dark and light storage.

*Table 7: Emulsifiers used in the shortenings*

| **Emulsifiers** | | | |
|---|---|---|---|
| | **Emulsifiers in shortening** | **Dosage to fat** | **Dosage in frosting** |
| 1 | Mono-, diglyceride | 1% | 0.50% |
| 2 (CE) | Tween® 60/polysorbate 60/ polyoxyeheylene sorbitan monostearate | 1% | 0.50% |
| 3 (CE) | Tween® 80/polysorbate 80/ polyoxymethylene sorbitan monooleate | 1% | 0.50% |
| 4 (CE) | Sunflower lecithin | 1% | 0.50% |
| 5 (CE) | Glycerol monooleate | 5% | 2.50% |
| 6 | Glyceryl monostearate | 5% | 2.50% |
| 7 (CE) | Monolaurin | 10% | 5% |
| 8 | Sorbitan monostearate/ Span® 60 | 0.70% | 0.35% |
| 9 | Ascorbyl palmitate | 1% | 0.50% |

Example 1 - Coconut Oil with emulsifiers

Experiments were conducted that measured the effect on the anthocyanin stability of different emulsifiers in a frosting comprising coconut oil as a fat source. The results of these experiments can be seen in Tables 8 and 9.

In the table:

* indicates data collected at 1-week light, and 2- week Dark;
** indicates data collected at 4-day light and 4-day Dark;
*** indicates data collected at 2-day light and 2-day Dark;

unmarked means data measured at 2 weeks in the dark and 3 months in the dark.

As seen in Tables 8 and 9, the combination of coconut oil with mono-diglyceride, glyceryl monostearate, and sorbitan monostearate demonstrated improvements in the color stability of anthocyanin in dark conditions. Coconut oil with sorbitan monostearate leads to improvements in the color stability of anthocyanin in light conditions. The combination of coconut oil with sorbitan monostearate as an emulsifier in the frosting resulted in improvements in the color stability of anthocyanin in both light and dark conditions.

*Tables* 8 *and* 9: *Coconut oil with emulsifiers; see also Figure 1*

| **Coconut oil (C12:0)** | | | | | |
|---|---|---|---|---|---|
| **Emulsifier** | | **Mono-, diglyceride** | **Poly-sorbate 60** | **Poly-sorbate 80** | **Sunflower lecithin** |
| **Initial** | L | 78.15 | 87.55 | 81.64 | 82.87 |
| | a* | 14.43 | 10.58 | 13 | 21.68 |
| | b* | 1.96 | 1.46 | 3.04 | 4.65 |
| **Ambient Light** | L | 89.45 | 96.99 | 88.97 | 89.29 |
| | a* | 2.74 | 0.52 | 0.76 | 3.06 |
| | b* | 5.72 | 3.96 | 6.45 | 6.48 |
| | % redness loss | 81.01% | 95.09% | 94.15% | 85.89% |
| | Delta E | 16.2 | 13.26 | 14.97 | 16.66 |
| **Ambient Dark** | L | 85.77 | 97.47 | 89.17 | 87.92 |
| | a* | 9.24 | 0.11 | 1.76 | 4.5 |
| | b* | 2.93 | 3.45 | 8.41 | 7.48 |
| | % redness loss | 35.97% | 98.96% | 86.46% | 79.24% |
| | Delta E | 8.27 | 13.79 | 14.52 | 15.09 |

(continued)

| Coconut oil (C12:0) | | | | | | |
|---|---|---|---|---|---|---|
| **Emulsifier** | | **Glycerol monooleate *** | **Glyceryl monostearate** | **Monolaurin** | **Sorbitan monostearate** | **Ascorbyl Palmitate** |
| **Initial** | L | 72.98 | 78.47 | 81.63 | 79.97 | 77.87 |
| | a* | 15.61 | 19.27 | 15.56 | 16.39 | 18.47 |
| | b* | 3.24 | 5.25 | 0.94 | 5.38 | 1.97 |
| **Ambient Light** | L | 96.43 | 92.17 | 91.02 | 79.01 | 89.92 |
| | a* | 0.13 | 2.52 | 2.41 | 14.72 | 6.67 |
| | b* | 4.3 | 4.84 | 5.44 | 4.11 | 5.3 |
| | % redness loss | 99.17% | 86.92% | 84.51% | 10.19% | 63.89% |
| | Delta E | 19.4 | 17.37 | 17.32 | 1.54 | 12.99 |
| **Ambient Dark** | L | 95.01 | 86.84 | 91.93 | 80.36 | 90.54 |
| | a* | 0.69 | 9.05 | 4.77 | 14.05 | 4.9 |
| | b* | 4.86 | 1.83 | 3.93 | 3.25 | 8.08 |
| | % redness loss | 95.58% | 53.04% | 69.34% | 14.28% | 73.47% |
| | Delta E | 18.4 | 9.62 | 12.13 | 2.14 | 15.92 |

Example 2 - Palm oil with emulsifiers

*Tables 10 and 11: Palm oil with emulsifiers; see also Figure 2*

| Palm oil (C16:0) | | | | | |
|---|---|---|---|---|---|
| **Emulsifier** | | **Mono-, diglyceride** | **Poly-sorbate 60** | **Poly-sorbate 80** | **Sunflowers lecithin** |
| **Initial** | L | 89.23 | 81.14 | 92.02 | 89.66 |
| | a* | 7.46 | 8.74 | 6.42 | 11.15 |
| | b* | 2.93 | 5.6 | 4.69 | 4.12 |
| **Ambient Light** | L | 92.06 | 91.87 | 95.28 | 91.17 |
| | a* | 0.78 | 0.78 | -0.64 | 0.71 |
| | b* | 3.9 | 3.05 | 6.23 | 4.75 |
| | % redness loss | 89.54% | 91.08% | 104.92% | 93.63% |
| | Delta E | 8.5 | 11.57 | 9.76 | 11.95 |
| **Ambient Dark** | L | 91.87 | 82.87 | 94.39 | 92.01 |
| | a* | 0.98 | 0.92 | -0.64 | 0.97 |
| | b* | 3.57 | 1.05 | 8.18 | 5.11 |
| | % redness loss | 86.86% | 89.47% | 109.97% | 91.30% |
| | Delta E | 8.1 | 9.34 | 10.2 | 11.71 |

(continued)

| Palm oil (C16:0) | | | | | | |
|---|---|---|---|---|---|---|
| **Emulsifier** | | **Glycerol monooleate** | **Glyceryl Monostearate** | **Monolaurin **** | **Sorbitan monostearate** | **Ascorbyl palmitate** |
| **Initial** | L | 90.75 | 84.37 | 90.55 | 89.63 | 87.66 |
| | a* | 10.04 | 10.47 | 10.44 | 11.48 | 13.15 |
| | b* | 2.81 | 4.28 | 2.89 | 6.18 | 4.12 |
| **Ambient Light** | L | 95.98 | 93.43 | 91.87 | 92.4 | 94.06 |
| | a* | 0.67 | 2.44 | 0.78 | 3.92 | 2.38 |
| | b* | 3.72 | 4.95 | 5.05 | 5.71 | 6.51 |
| | % redness loss | 93.33% | 76.70% | 92.53% | 65.85% | 81.90% |
| | Delta E | 11.35 | 10.55 | 11.55 | 7.88 | 12.4 |
| **Ambient Dark** | L | 95.83 | 76.79 | 91.34 | 91.08 | 90.54 |
| | a* | 0.42 | 9.32 | 1.99 | 7.08 | 4.9 |
| | b* | 5.53 | 7.82 | 4.95 | 5.31 | 8.08 |
| | % redness loss | 95.82% | 10.98% | 80.94% | 38.33% | 62.74% |
| | Delta E | 12.29 | 6.13 | 9.75 | 4.15 | 9.51 |

As seen in Tables 10 and 11 above, the combination of palm oil with sorbitan monostearate and glyceryl monostearate as the emulsifiers, demonstrated improved color stability of anthocyanin in dark conditions.

Example 3 - Interesterified soybean oil with emulsifiers

Further experiments were conducted that screened the effect on the anthocyanin stability of different emulsifiers in a frosting comprising interesterified soybean oil as a fat source.

As seen in Tables 12 and 13, the combination of interesterified soybean oil with mono-diglyceride, glyceryl monostearate, and sorbitan monostearate resulted in improvements of the color stability of anthocyanin in dark conditions.

*Tables 12: Interesterified soybean oil with emulsifiers see also Figure 3*

| Interesterified soybean oil (C18:0) | | | | | |
|---|---|---|---|---|---|
| **Emulsifier** | | **Mono-, diglyceride** | **Polysorbate 60 ***** | **Polysorbate 80 ***** | **Sunflower lecithin** |
| **Initial** | L | 82.78 | 90.47 | 90.18 | 89.12 |
| | a* | 9.86 | 8.79 | 4.58 | 9.64 |
| | b* | 2.87 | 2.73 | 1.39 | 3.94 |
| **Ambient Light** | L | 93.52 | 93.5 | 94.97 | 95.68 |
| | a* | 1.15 | 1.24 | 0.13 | 0.43 |
| | b* | 3.09 | 1.1 | 2.93 | 4.31 |
| | % redness loss | 88.34% | 85.89% | 85.89% | 95.54% |
| | Delta E | 11.98 | 8.71 | 6.87 | 11.62 |
| **Ambient Dark** | L | 87.59 | 95.65 | 94.5 | 96.19 |
| | a* | 8.62 | 0.55 | 0.4 | 1.09 |
| | b* | 2.35 | 1.31 | 2.31 | 3.62 |
| | % redness loss | 12.58% | 93.74% | 91.27% | 88.69% |
| | Delta E | 3.37 | 10 | 6.22 | 10.65 |

*Tables 13: Interesterified soybean oil with emulsifiers; see also Figure 3*

| Interesterified soybean oil (C18:0) | | | | | | |
|---|---|---|---|---|---|---|
| **Emulsifier** | | **Glycerol monooleate ***** | **Glyceryl Monostearate** | **Monolaurin *** | **Sorbitan monostearate** | **Ascorbyl Palmitate** |
| **Initial** | L | 90.23 | 83.79 | 85.84 | 83.46 | 81.56 |
| | a* | 9.51 | 11.83 | 6.83 | 13.29 | 11.18 |
| | b* | 2.65 | 3.91 | 1.49 | 3.51 | 2.35 |
| **Ambient Light** | L | 93.68 | 90.72 | 95.01 | 93.41 | 91.06 |
| | a* | 0.43 | 2.65 | 0.04 | 2.4 | 8.52 |
| | b* | 3.11 | 2.38 | 3.37 | 4.16 | 2.54 |
| | % redness loss | 95.48% | 77.60% | 99.41% | 81.94% | 23.79% |
| | Delta E | 10.86 | 10.98 | 10.6 | 12.76 | 6.62 |
| **Ambient Dark** | L | 92.17 | 84.79 | 89.77 | 86.26 | 85.5 |
| | a* | 0.51 | 8.22 | 0.25 | 8.55 | 3.01 |
| | b* | 3.61 | 4.79 | 3.91 | 2.24 | 8.11 |
| | % redness loss | 94.64% | 30.52% | 96.34% | 35.67% | 73.08% |
| | Delta E | 10.73 | 5.44 | 9.15 | 4.48 | 11.09 |

Antioxidants

The effectiveness of different antioxidants (butyl hydroquinone, rosemary extract, tocopherol, and ascorbyl palmitate) in stabilizing anthocyanins as part of the fat-based compositions comprising different fat sources, was also tested. The emulsifier used in the frostings tested was mono-diglyceride, due to its favorable properties in stabilizing the color of anthocyanin as outlined above.

The antioxidant-containing emulsified solid fat frosting was also prepared under two steps, including shortening and frosting preparation.

Prior to the frosting procedure, the solid fat and emulsifiers were weighed and melted in an oven (Memmert®, Universal Oven U) with a setting of 60 °C. The melted mixture was then transferred to the Vitamix blender and the antioxidants were added. The mixture was then blended with a speed of 8 for 5 min. The dosage of emulsifiers incorporated into the shortening varied due to the FDA limitation After blending with high speed, mixed solid fat was cooled and stored in the refrigerator before use.

The antioxidant-containing emulsified shortening was then incorporated with the rest of the frosting ingredients and color for frosting reparation, as the method described in Methods in Example 1. The prepared samples were also deposited into the clear jar with a lid (20mL) for dark and light storage.

*Table 14: Antioxidants used in the shortenings*

| Antioxidants | | | |
|---|---|---|---|
| | **Antioxidants** | **Dosage to fat** | **Dosage in frosting** |
| 1 | Tertiary butylhydroquinone/TBHQ | 0.02% | 0.01% |
| 2 | Rosemary extract | 0.25% | 0.13% |
| 3 | Tocopherol | 0.20% | 0.10% |
| 4 | Ascorbyl palmitate | 0.10% | 0.05% |

Example 4 - Coconut oil with mono-diglyceride and antioxidants

Experiments were conducted that evaluated the role of the different antioxidants in stabilizing the anthocyanin with coconut oil as a fat source and with mono-diglyceride as the preferred emulsifier to be used as part of the fat-based

composition.

*Table 15: Coconut oil with mono-diglyceride and antioxidants; see also Figure 4*

| **Coconut oil (C12:0)** | | | | | | |
|---|---|---|---|---|---|---|
| | **Emulsifier** | **Mono-, diglyceride** | | | | |
| | **Antioxidants** | **None** | **TBHQ** | **Rosemary Extract** | **Tocopherol** | **Ascorbyl Palmitate** |
| **Initial** | **L** | 78.15 | 85.97 | 81.64 | 83.43 | 83.31 |
| | **a*** | 14.43 | 15.24 | 19.63 | 18.49 | 14.36 |
| | **b*** | 1.96 | 2.97 | 3.39 | 2.14 | 3.74 |
| **2-week Ambient Light** | **L** | 89.45 | 88.29 | 91.78 | 91.78 | 82.85 |
| | **a*** | 2.74 | 3.83 | 6.79 | 6.79 | 13.85 |
| | **b*** | 5.72 | 3.32 | 3.51 | 3.51 | 5.17 |
| | **% redness loss** | 81.01% | 74.87% | 65.41% | 63.28% | 3.55% |
| | **Delta E** | 16.2 | 10.63 | 12.02 | 10.94 | 1.22 |
| **3-month Ambient Dark** | **L** | 85.77 | 89.88 | 85.14 | 85.99 | 84.83 |
| | **a*** | 9.24 | 8.8 | 14.1 | 13.32 | 9.02 |
| | **b*** | 2.93 | 4.37 | 3.86 | 2.53 | 8.27 |
| | **% redness loss** | 35.97% | 42.26% | 28.17% | 27.96% | 37.19% |
| | **Delta E** | 8.27 | 6.09 | 4.46 | 4.02 | 6.41 |

As seen in Table 15 above, the antioxidant ascorbyl palmitate improved the stability of anthocyanin in light conditions the most.

Example 5 - Palm oil with mono-diglyceride and antioxidants

Further experiments were conducted that evaluated the role of the different antioxidants in stabilizing anthocyanin with palm oil as a fat source and with mono-diglyceride as the preferred emulsifier to be used as part of the fat-based composition.

*Table 16: Palm oil with mono-diglyceride and antioxidants; see also Figure 5*

| **Palm Oil (C16:0)** | | | | | | |
|---|---|---|---|---|---|---|
| | **Emulsifier** | **Mono-, diglyceride** | | | | |
| | **Antioxidants** | **None *** | **TBHQ** | **Rosemary Extract** | **Tocopherol** | **Ascorbyl Palmitate** |
| **Initial** | **L** | 89.23 | 88.43 | 83.25 | 80.67 | 85.99 |
| | **a*** | 7.46 | 9.32 | 14.18 | 13 | 14.22 |
| | **b*** | 2.93 | 4.9 | 9.69 | 6.23 | 6.79 |
| **2-week Ambient Light** | **L** | 92.06 | 93.97 | 87.17 | 91.37 | 87.19 |
| | **a*** | 0.78 | -0.05 | 2.68 | 2.44 | 7.54 |
| | **b*** | 3.9 | 6.78 | 11.13 | 6.47 | 6.71 |
| | **% redness loss** | 89.54% | 100.54% | 81.10% | 81.23% | 46.98% |
| | **Delta E** | 8.5 | 12.31 | 12.59 | 13.08 | 5.96 |

(continued)

| Palm Oil (C16:0) | | | | | | |
|---|---|---|---|---|---|---|
| | Emulsifier | Mono-, diglyceride | | | | |
| | Antioxidants | None * | TBHQ | Rosemary Extract | Tocopherol | Ascorbyl Palmitate |
| 3-month Ambient Dark | L | 91.87 | 94.79 | 84.6 | 87.97 | 84.97 |
| | a* | 0.98 | 1.77 | 5.56 | 3.64 | 4.5 |
| | b* | 3.57 | 5 | 12.49 | 8.58 | 12.88 |
| | % redness loss | 86.86% | 81.01% | 60.79% | 72.00% | 68.35% |
| | Delta E | 8.1 | 9.5 | 9.35 | 11.33 | 11.95 |
| * Means the measured at 4 days after dark and light storage | | | | | | |

As seen in Table 16 above, as for the fat-based composition comprising palm oil , the antioxidant ascorbyl palmitate improved the stability of anthocyanin in light conditions from 4 days ( the control) to 2 weeks. Other antioxidants improved the light stability from 4 days to close to 2 weeks, however, they didn't meet the criteria. All the antioxidants also improved the dark stability of palm oil-containing samples from 4 days to close to 3 months, but they also didn't meet the 3-month target.

Example 6 - Interesterified soybean oil with mono-diglyceride and antioxidants

Experiments were also conducted that evaluated the role of the different antioxidants in stabilizing the anthocyanin with interesterified soybean oil as a fat source and with mono-diglyceride as the preferred emulsifier to be used as part of the fat-based composition.

As seen in Table 17, as for palm oil and coconut oil as part of the fat-based composition, the antioxidant ascorbyl palmitate improved the stability of anthocyanin in light conditions the most.

*Table 17: Interesterified soybean oil with mono-diglyceride and antioxidants; see also Figure 6*

| Interesterified soybean Oil (C18:0) | | | | | | |
|---|---|---|---|---|---|---|
| | Emulsifier | Mono-, diglyceride | | | | |
| | Antioxidants | None | TBHQ | Rosemary Extract | Tocopherol | Ascorbyl palmitate |
| Initial | L | 82.78 | 87.35 | 85.22 | 88.56 | 87.65 |
| | a* | 9.86 | 11.86 | 9.48 | 9.45 | 11.58 |
| | b* | 2.87 | 3.36 | 4.26 | 3.06 | 3.55 |
| 2-week Ambient Light | L | 93.52 | 85.61 | 94.59 | 93.37 | 90.2 |
| | a* | 1.15 | 2.48 | 2.98 | 2.18 | 9.91 |
| | b* | 3.09 | 3.21 | 3.23 | 2.89 | 2.14 |
| | % redness loss | 88.34% | 79.09% | 68.57% | 76.93% | 14.42% |
| | Delta E | 11.98 | 9.7 | 9.07 | 8.49 | 2.4 |
| 3-month Ambient Dark | L | 87.59 | 89.94 | 91.76 | 84.26 | 89.05 |
| | a* | 8.62 | 8.85 | 5.66 | 7.7 | 9.89 |
| | b* | 2.35 | 2.93 | 3.17 | 2.08 | 2.83 |
| | %redness loss | 12.58% | 25.38% | 40.11% | 18.52% | 14.59% |
| | Delta E | 3.37 | 3.1 | 5.63 | 3.3 | 1.75 |

Ascorbyl palmitate as an antioxidant

Ascorbyl palmitate as an antioxidant was tested across different emulsifiers and fat sources as part of the fat-based composition, due to its favourable properties in stabilizing the color of anthocyanin.

Example 7 - Coconut oil with ascorbyl palmitate and emulsifiers

Experiments were conducted that evaluated the role of ascorbyl palmitate across different emulsifiers with coconut oil as a fat source as part of the fat-based composition.

The # of * in the following tables indicates different data measurement days:

* indicates data collected at 2-week light and 1 month Dark;
** indicates data collected at 1-week light and 2-week Dark;
*** indicates data collected at 4-day light and 4-day Dark;

unmarked means data measured at 2 week in dark and 3 month in dark.

As seen in Table 18, the emulsifiers mono-diglycerides, sorbitan monostearate and glyceryl monostearate used in combination with ascorbyl palmitate improved the stability of anthocyanin in ambient light and ambient dark conditions the most in a fat-based composition comprising coconut oil.

*Table 18: Coconut oil with ascorbyl palmitate and emulsifiers see also Figure 7*

| Coconut oil (C12: 0) | | | | | | | | |
|---|---|---|---|---|---|---|---|---|
| **Emulsifier** | | **Mono-, diglyceride** | **Sorbitan monostearate** | **Glyceryl Monostearate** | **Polysorbate 60 **** | **Sunflower lecithin *** | **Polysorbate 80 **** | **Monolaurin *** |
| **Antioxidants** | | **Ascorbyl palmitate** | | | | | | |
| **Initial** | **L** | 83.31 | 85.78 | 86.93 | 85.28 | 87.55 | 90.08 | 82.3 |
| | **a*** | 14.36 | 11.99 | 11.3 | 11.79 | 11.04 | 7.43 | 17.93 |
| | **b*** | 3.74 | 3.55 | 6.17 | 4.46 | 4.81 | 2.43 | 2.65 |
| **Ambient Light** | **L** | 82.85 | 86.41 | 87.39 | 92.45 | 92.98 | 86.87 | 83.2 |
| | **a*** | 13.85 | 9.72 | 7.75 | 2.46 | 3.08 | 0.1 | 5.43 |
| | **b*** | 5.17 | 5.37 | 5.96 | 6.08 | 6.55 | 9 | 7.13 |
| | **% Redness loss** | 3.55% | 18.93% | 31.42% | 79.13% | 72.10% | 98.65% | 69.72% |
| | **Delta E** | 1.22 | 2.66 | 3.3 | 11.25 | 9.55 | 11.69 | 11.89 |
| **Ambient Dark** | **L** | 83.85 | 87.9 | 85.74 | 91.48 | 80.66 | 92.15 | 83.02 |
| | **a*** | 8.68 | 9.23 | 6.3 | 2.05 | 3.97 | 0.4 | 5.93 |
| | **b*** | 8.9 | 6.54 | 10.14 | 6.6 | 15.12 | 7.09 | 8.03 |
| | **% Redness loss** | 39.55% | 23.02% | 44.25% | 82.61% | 64.04% | 94.62% | 66.93% |
| | **Delta E** | 7.02 | 4.07 | 6.67 | 11.74 | 13.2 | 10.31 | 11.8 |

Example 8 - Palm oil with ascorbyl palmitate and emulsifiers

Further experiments were conducted that evaluated the role of ascorbyl palmitate across different emulsifiers with palm oil as a fat source as part of the fat-based composition.

As seen in Table 19 above, the emulsifiers sorbitan monostearate and glyceryl monostearate used in combination with ascorbyl palmitate improved the stability of anthocyanin in ambient light and ambient dark conditions the most in a fat-based composition comprising palm oil.

*Table 19: Palm oil with ascorbyl palmitate and emulsifiers; see also Figure 8*

| **Palm oil (C16:0)** | | | | | | | | |
|---|---|---|---|---|---|---|---|---|
| **Emulsifier** | | **Mono-, diglyceride** | **Sorbitan monostearate** | **Glyceryl Monostearate** | **Polysorbate 60 **** | **Sunflower lecithin **** | **Polysorbate 80 ***** | **Monolaurin *** |
| **Antioxidant** | | **Ascorbyl palmitate** | | | | | | |
| **Initial** | **L** | 85.99 | 86.93 | 87.24 | 86.66 | 79.87 | 89.35 | 86.67 |
| | **a*** | 14.22 | 11.3 | 11.57 | 14.32 | 19.29 | 5.46 | 12.48 |
| | **b*** | 6.79 | 6.17 | 5.87 | 1.81 | 5.19 | 5.04 | 3.37 |
| **Ambient Light** | **L** | 87.19 | 87.39 | 88.37 | 85.33 | 80.26 | 93.6 | 89.53 |
| | **a*** | 7.54 | 7.75 | 6.74 | 3.4 | 4.97 | 0.69 | 0.62 |
| | **b*** | 6.71 | 5.96 | 6 | 5.92 | 15.7 | 6.81 | 6.32 |
| | **% Redness loss** | 46.98% | 31.42% | 41.75% | 76.26% | 74.24% | 87.36% | 95.03% |
| | **Delta E** | 5.96 | 3.3 | 4.68 | 11.63 | 16.75 | 7.14 | 13.96 |
| **Ambient Dark** | **L** | 84.97 | 84.09 | 85.41 | 89.58 | 90.49 | 92.15 | 92.27 |
| | **a*** | 4.5 | 5.36 | 4.98 | 1.56 | 1.74 | 1.44 | 1.51 |
| | **b*** | 12.88 | 10.46 | 5.96 | 8.62 | 9.33 | 7.34 | 7.31 |
| | **% Redness loss** | 68.35% | 52.57% | 56.96% | 89.11% | 90.98% | 73.63% | 87.90% |
| | **Delta E** | 11.95 | 8 | 6.69 | 15.52 | 19.01 | 6.08 | 13.44 |

Example 9 - interesterified soybean oil with ascorbyl palmitate and emulsifiers

Experiments were also conducted that evaluated the role of ascorbyl palmitate across different emulsifiers with interesterified soybean oil as a fat source as part of the fat-based composition.

As seen in Table 20, the emulsifiers mono-diglycerides, sorbitan monostearate and glyceryl monostearate used in combination with ascorbyl palmitate improved the stability of anthocyanin in ambient light and ambient dark conditions the most in a fat-based composition comprising interesterified soybean oil.

Overall, the use of ascorbyl palmitate in a fat-based composition comprising emulsifiers with a carbon chain length of 16 or greater, an HLB value of less than 9, and a minimum degree of unsaturation resulted in the improved light stability of anthocyanin, regardless of the type of fat used as the fat source.

*Table 20: interesterified soybean oil with ascorbyl palmitate and emulsifiers see also Figure 9*

| Interesterified Soybean Oil (C18:0) | | | | | | | | |
|---|---|---|---|---|---|---|---|---|
| **Emulsifier** | | **Mono-, diglyceride** | **Sorbitan monostearate** | **Glyceryl Monostearate** | **Polysorbate 60 *** | **Sunflower lecithin **** | **Polysorbate 80 ***** | **Monolaurin*** |
| **Antioxidant** | | **Ascorbyl palmitate** | | | | | | |
| **Initial** | **L** | 87.65 | 84.27 | 84.77 | 87.87 | 83.19 | 90.78 | 81.9 |
| | **a*** | 11.58 | 13.16 | 13.94 | 10.08 | 15.59 | 6.08 | 16.7 |
| | **b*** | 3.55 | 3.52 | 3.73 | 2.56 | 3.09 | 2.08 | 1.91 |
| **Ambient Light** | **L** | 90.2 | 86.39 | 87.47 | 94.41 | 94.48 | 85.49 | 90.56 |
| | **a*** | 9.91 | 9.61 | 9.58 | 1.54 | 1.53 | 0.29 | 1.17 |
| | **b*** | 2.14 | 4.37 | 3.68 | 3.29 | 5.66 | 4.55 | 6.87 |
| | **% Redness loss** | 14.42% | 26.98% | 31.28% | 84.72% | 90.19% | 95.23% | 92.99% |
| | **Delta E** | 2.36 | 3.46 | 4.02 | 10.37 | 16.25 | 8.71 | 17.59 |
| **Ambient Dark** | **L** | 89.05 | 87.9 | 79.29 | 94.73 | 94.47 | 95.54 | 92.24 |
| | **a*** | 9.89 | 9.23 | 10.2 | 1.71 | 2.44 | 0.81 | 4.09 |
| | **b*** | 2.83 | 6.54 | 5.68 | 5.27 | 4.66 | 4.93 | 6.98 |
| | **% Redness loss** | 14.59% | 29.86% | 26.83% | 83.04% | 84.35% | 86.68% | 75.51% |
| | **Delta E** | 1.75 | 5.06 | 5.21 | 10.89 | 14.75 | 8 | 14.45 |

Example 10 White chocolate compound with ascorbyl palmitate

To test the effect of a primary emulsifier, a white chocolate compound containing anthocyanin colorant was prepared and different amounts of ascorbyl palmitate were mixed with the colored compound.

For this test, commercially available white chocolate compound (Alpine white wafers) containing sugar, vegetable oil, palm kernel oil and hydrogenated palm kernel oil, whey protein, whole milk solid, nonfat dry milk solid, soy lecithin, salt, and artificial flavor, was melted in a Memmert oven at 47 °C, while stirring periodically to ensure even melting. Once the compound was fully melted, ascorbyl palmitate was added and mixed. Next, anthocyanin powder was added and stirred evenly to distribute color. The mixture thus obtained was deposited on a disk for stability testing.

The overall composition was 99.4 wt.% of white compound and 0.6 wt.% anthocyanin powder.

Table 21 shows the results of the stability tests:

*Table 21 Stability of white chocolate compound with and without primary emulsifier*

| | Initial | | | 8- Month Dark storage | | | |
|---|---|---|---|---|---|---|---|
| Ascorbyl Palmitate | L* | a* | b* | L* | a* | b* | Delta b* |
| 0% | 53.43 | 27.52 | 7.62 | 53.15 | 17.16 | -2.57 | -10.19 |
| 0.10% | 53.93 | 27.84 | 7.82 | 53.55 | 18.87 | 2.50 | -5.32 |
| 0.25% | 53.16 | 27.57 | 7.65 | 52.73 | 17.97 | 7.83 | 0.18 |
| 0.50% | 52.22 | 26.93 | 7.62 | 53.19 | 17.17 | 12.13 | 4.51 |
| 1.00% | 53.2 | 27.35 | 7.68 | 53.50 | 16.31 | 15.07 | 7.39 |
| Delta b*: A negative (-) value indicates a development of blue, or loss of yellow. A positive (+) value indicates the presence of yellow. | | | | | | | |

The above results show that the addition of ascorbyl palmitate to white chocolate compound containing anthocyanins, prevents color shift to purple.

REFERENCES

Kammerer, D.R. (2016), 3 - Anthocyanins. In R. Carle, & R. M. Schweiggert (Eds.), Handbook on Natural Pigments in Food and Beverages (pp. 61-80): Woodhead Publishing.

Montilla, E.C. et al., "Anthocyanin Composition of Black Carrot (Daucus carota ssp. sativus var. atrorubens Alef.) Cultivars Antonina, Beta Sweet, Deep Purple, and Purple Haze", J. Agric. Food Chem. 2011, 59, 7, 3385-3390

Sudhakar, P. et al.(2016), 15 - Plant Pigments. Phenotyping Crop Plants for Physiological and Biochemical Traits (pp. 121-127): Academic Press

Saraiva, A., Carrascosa, C., Raheem, D., Ramos, F., & Raposo, A. (2020). Natural sweeteners: the relevance of food naturalness for consumers, food security aspects, sustainability and health impacts. *International Journal of Environmental Research and Public Health,* 17(17), 6285. https://doi.org/10.3390/ijerph17176285

Lindbloom, B. J. (n.d.). Delta E (CIE 2000). Bruce Lindbloom. http://www.brucelindbloom.com/index.html?EanDeltaE_CIE2000.html


## Claims

1. A fat-based composition comprising:

a fat blend,

a sweetener,
an emulsifier composition,
and an anthocyanin-based colorant,

wherein the fat blend comprises triglycerides,

wherein the triglycerides comprise at least 40 wt.% C12 to C20 fatty acid residues, and wherein the triglycerides comprise at least 40 wt.% saturated fatty acid residues,
based on the total weight of fatty acid residues in the triglycerides; and

wherein the emulsifier composition comprises a primary emulsifier which has an HLB value of less than 9; and

wherein the primary emulsifier comprises C14 to C20 fatty acid residues,
wherein at least 40 wt.% of the C14 to C20 fatty acid residues in the primary emulsifier are saturated fatty acid residues, based on the total weight of fatty acid residues in the primary emulsifier.

**2.** The fat-based composition of claim 1, wherein the melting point of the fat blend is at least 24°C.

**3.** The fat-based composition of claim 1 or 2, wherein the triglycerides comprise at least 50 wt.% saturated fatty acid residues.

**4.** The fat-based composition of any of claims 1-3, wherein the C12 to C20 fatty acid residues in the triglycerides in the fat blend comprise at least 30 wt.% C12:0, C14:0, C16:0, and C18:0 fatty acid residues or a combination thereof, based on the total weight of the C12 to C20 fatty acid residues and wherein the C14 to C20 fatty acid residues in the primary emulsifier comprise at least 30 wt.% C14:0, C16:0, and C18:0 fatty acid residues or a combination thereof, based on the total weight of the C14 to C20 fatty acid residues.

**5.** The fat-based composition of any of claims 1-4, wherein the fat blend comprises coconut oil, palm kernel oil, laurel oil, palm oil, butter, cacao butter, milk fat, hydrogenated vegetable oil, interesterified vegetable oil, or a combination thereof.

**6.** The fat-based composition of claim 5, wherein the hydrogenated and interesterified vegetable oils are sourced from soybean, cottonseed, corn, sunflower, safflower, canola, coconut, olive, peanut, palm or a combination thereof.

**7.** The fat-based composition of any of claims 1-6, wherein the primary emulsifier comprises C16 or C18 saturated fatty acid residues, or a combination thereof.

**8.** The fat-based composition of claim 7, wherein the primary emulsifier is a mono- or diglyceride, a glycerol fatty acid ester, sorbitan fatty acid ester, or ascorbyl fatty acid ester.

**9.** The fat-based composition of any of claims 1-8, wherein the anthocyanin-based colourant is a concentrate from one or more of black carrot, purple carrot, purple sweet potato, hibiscus, radish, red sweet potato, grape, aronia, blueberry and elderberry .

**10.** The fat-based composition of claim 9, wherein the anthocyanin-based colourant is a concentrate from one or more of radish, black carrot, purple carrot, purple sweet potato and red sweet potato.

**11.** The fat-based composition of any of claims 1-10, wherein the fat-based composition further comprises an antioxidant.

**12.** The fat-based composition of claim 11, wherein the antioxidant is selected from the group consisting of tertiary butyl hydroquinone, rosemary extract (rosmarinic acid), tocopherol and ascorbyl palmitate.

**13.** The fat-based composition of claim 12, wherein the antioxidant is ascorbyl palmitate.

**14.** The fat-based composition of any of claims 1-13, wherein the sweetener is selected from sucrose, glucose, fructose, lactose, maltose, galactose, corn syrup, trehalose, high fructose corn syrup, erythritol, xylitol, maltitol, allulose, stevia, monk fruit, aspartame, saccharin, sucralose, neotame, acesulfame potassium and combinations thereof.

**15.** The fat-based composition of any of claims 1-14 comprising:

10-70 wt.% of the fat blend;
1-80 wt.% of the sweetener;
0.01-10 wt.% of the emulsifier composition;
0.01-5 wt.% of the anthocyanin-based colourant;

based on the total weight of the fat-based composition.

**16.** The fat-based composition of claim 15, further comprising 0.01-5 wt.% antioxidant.

**17.** The fat-based composition of claim 15 or 16, further comprising 0.01-10 wt.% water.

**18.** Use of the fat-based composition of any of claims 1-17 in an icing, coating, frosting or compound chocolate or as a filling or crème filling to be used in an edible product.

**19.** The fat-based composition of any of claims 1 to 17, which is an icing, coating, frosting, or compound chocolate or a filling or crème filling to be used in an edible product.

FIGURE 1

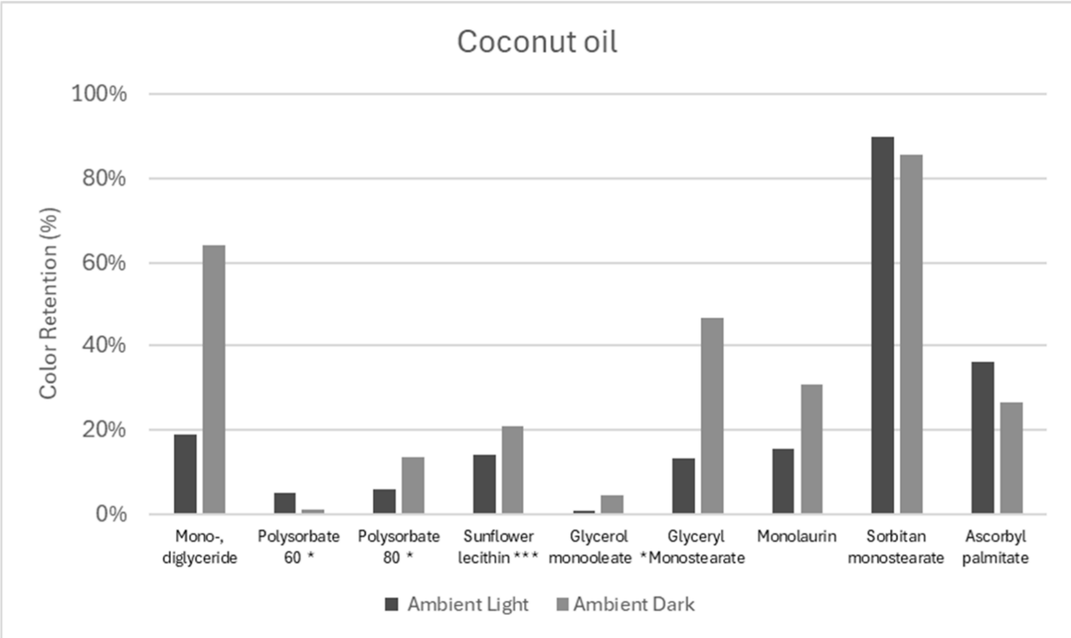


FIGURE 2

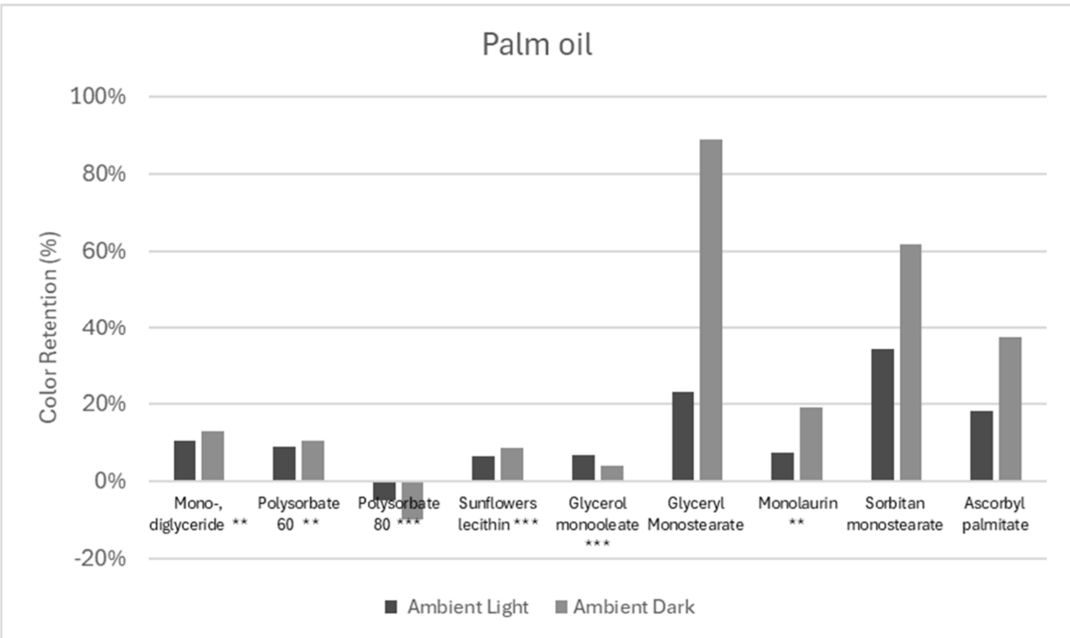

FIGURE 3

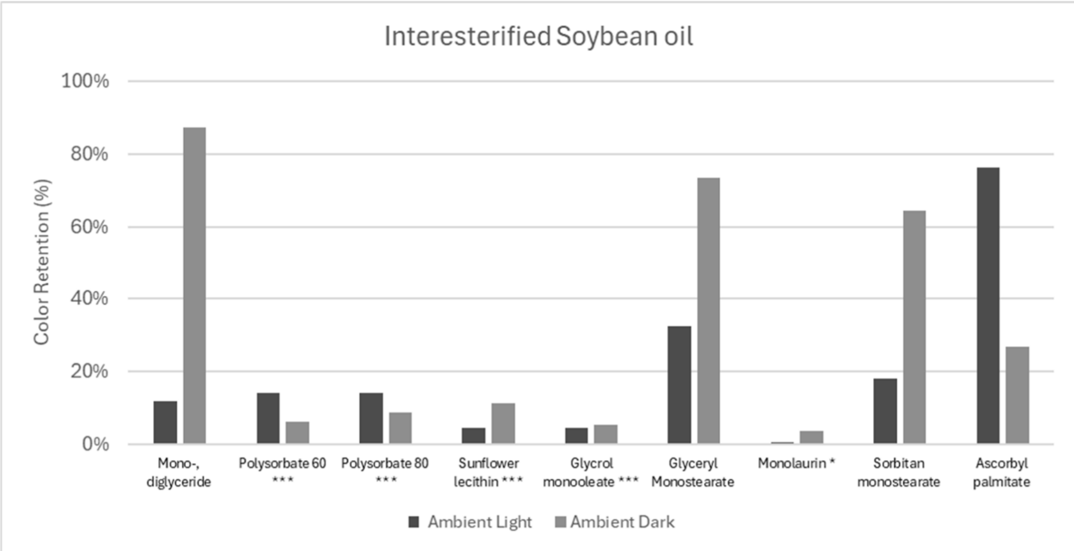


FIGURE 4

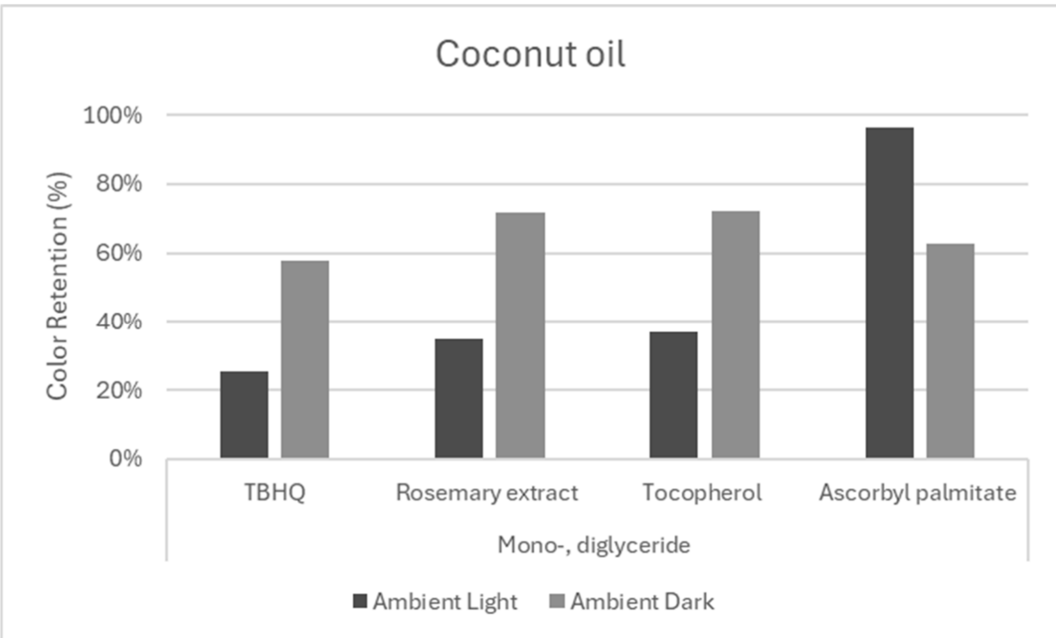

FIGURE 5

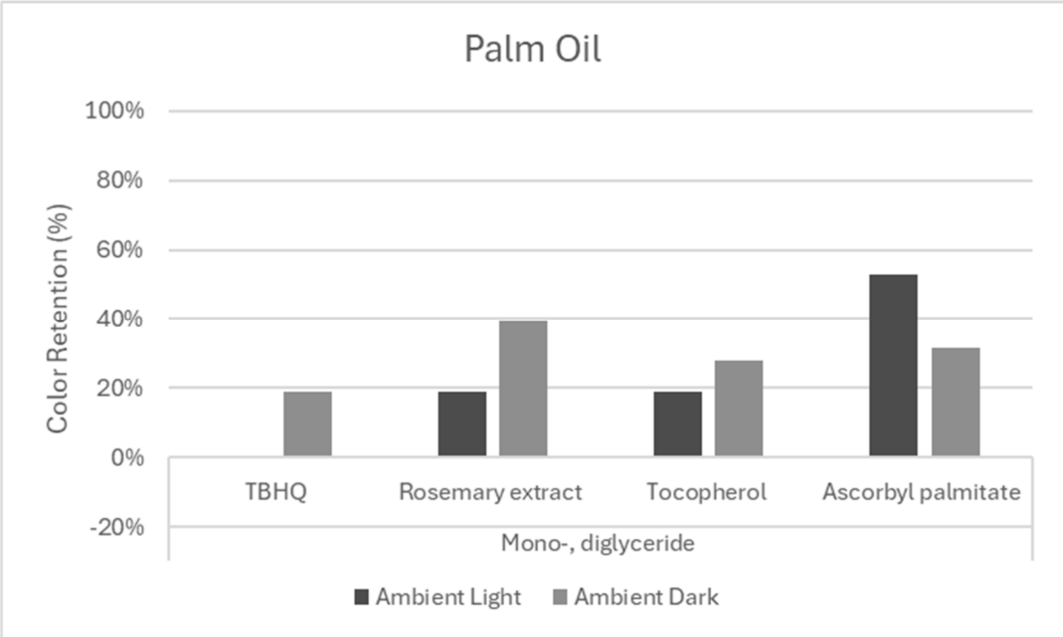


FIGURE 6

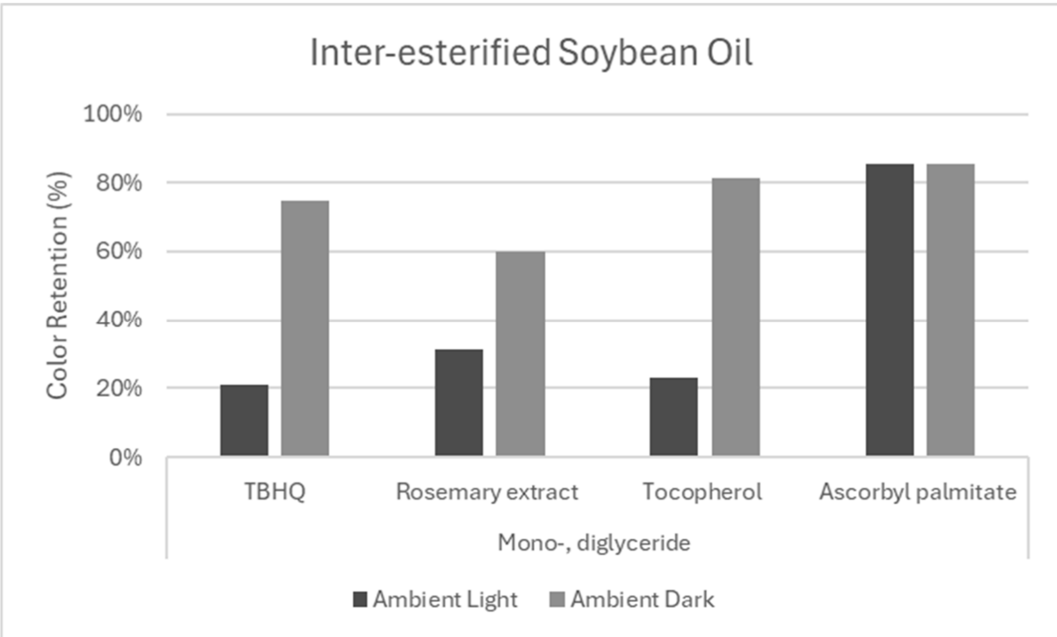

FIGURE 7

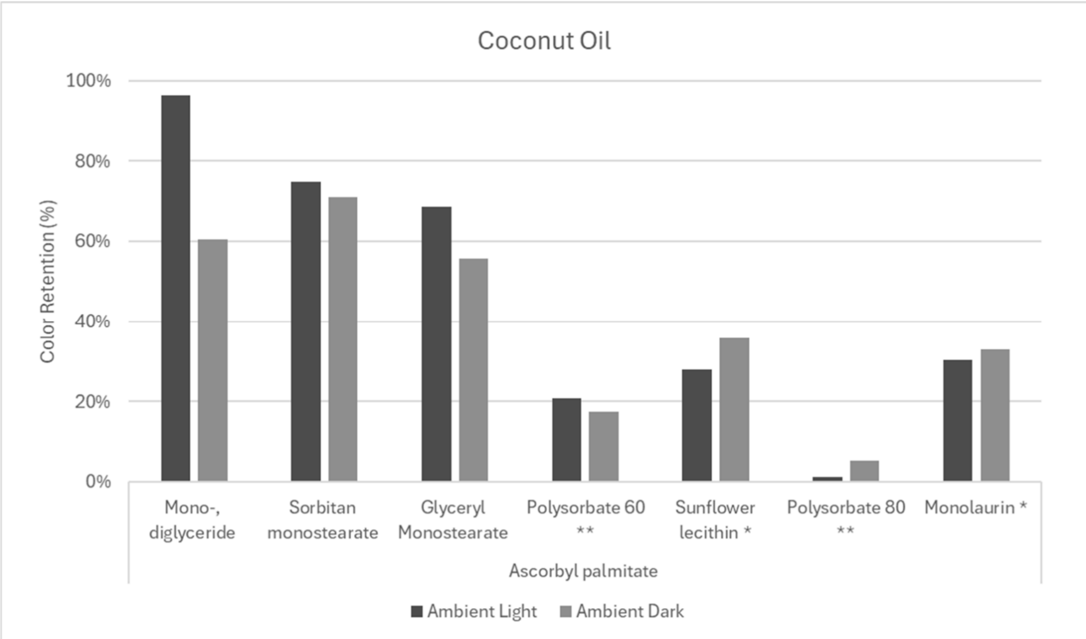


FIGURE 8

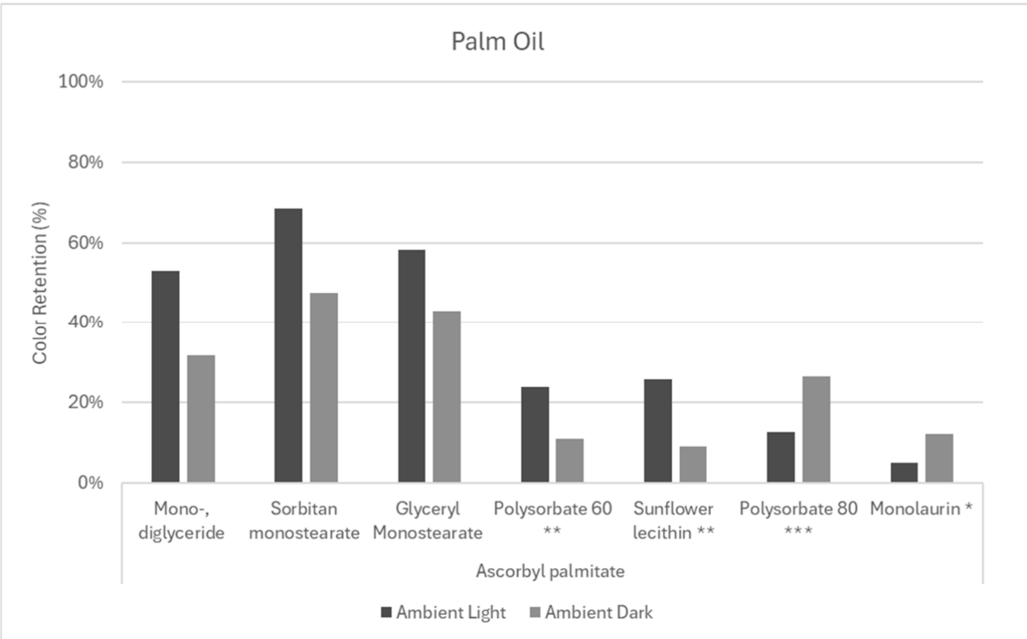

FIGURE 9

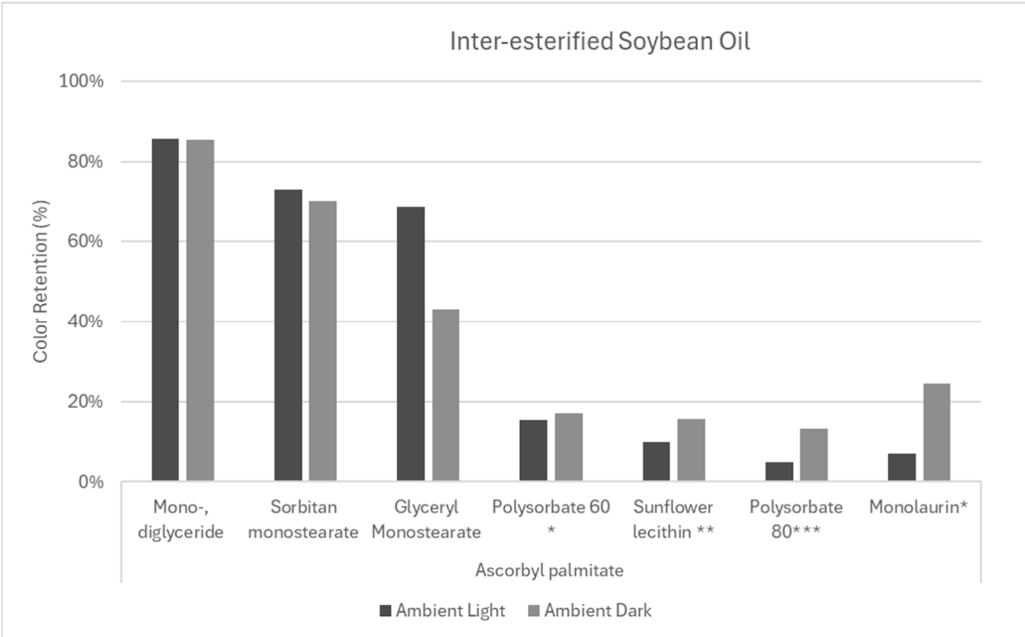
Inter-esterified Soybean Oil
100%
80%
60%
40%
20%
0%
Color Retention (%)
Mono-, diglyceride
Sorbitan monostearate
Glyceryl Monostearate
Polysorbate 60 *
Sunflower lecithin **
Polysorbate 80***
Monolaurin*
Ascorbyl palmitate
Ambient Light
Ambient Dark

Europäisches Patentamt
European Patent Office
Office européen des brevets

# EUROPEAN SEARCH REPORT

Application Number
EP 25 21 6345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 106 343 124 A (ZHONGWEI JINDI FROZEN FOOD CO LTD) 25 January 2017 (2017-01-25)<br>* paragraph [0012] - paragraph [0036]; claims 1-10; examples 1-4 *<br>* paragraph [0066] *<br>----- | 1-19 | INV.<br>A21D13/20<br>A21D13/30<br>A21D13/38<br>A23D7/00<br>A23D7/005<br>A23D9/00<br>A23D9/007<br>A23G1/30<br>A23G3/34<br>A23G3/36<br>A23G3/40<br>A23G3/48<br>A23L5/43<br>A23L29/00<br>A23L29/10<br>A23L29/30 |
| A | JP 7 596098 B2 (TAIYO OIL & FAT MFG)<br>9 December 2024 (2024-12-09)<br>* paragraph [0005] - paragraph [0008] *<br>* paragraph [0011] - paragraph [0019] *<br>* paragraph [0027] - paragraph [0028] *<br>* paragraph [0030] - paragraph [0037] *<br>* paragraph [0041]; claims 1-9 *<br>----- | 1-19 | |
| A | WO 2010/096597 A2 (PERLMAN DANIEL [US])<br>26 August 2010 (2010-08-26)<br>* paragraph [0013] - paragraph [0014] *<br>* paragraph [0017] - paragraph [0028] *<br>* paragraph [0037] - paragraph [0039] *<br>* paragraph [0049] *<br>* paragraph [0052] - paragraph [0054] *<br>* paragraph [0060] - paragraph [0067]; claims 1-23,28, 39, 40 *<br>----- | 1-19 | TECHNICAL FIELDS SEARCHED (IPC)<br>A21D<br>A23D<br>A23G<br>A23L |
| A | WIJESEKARA THARUKA ET AL: "A critical review on the stability of natural food pigments and stabilization techniques", FOOD RESEARCH INTERNATIONAL, ELSEVIER, AMSTERDAM , NL,<br>vol. 179, 11 January 2024 (2024-01-11), XP087466647,<br>ISSN: 0963-9969, DOI: 10.1016/J.FOODRES.2024.114011<br>[retrieved on 2024-01-11]<br>* abstract *<br>* paragraph [01.3] *<br>* paragraph [02.1] - paragraph [2.1.5]; table 1 *<br>-----<br>-/-- | 1-19 | |

The present search report has been drawn up for all claims

1

| Place of search | Date of completion of the search | Examiner |
|---|---|---|
| Munich | 13 April 2026 | Munteanu, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 25 21 6345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2021 106508 A (KOBAYASHI PHARMACEUTICAL CO LTD) 29 July 2021 (2021-07-29)<br>* paragraph [0001] - paragraph [0003] *<br>* paragraph [0007] - paragraph [0011] *<br>* paragraph [0014] *<br>* paragraph [0019] - paragraph [0030] *<br>* paragraph [0033]; claims 1-4; examples 1-2 *<br>----- | 1-19 | |
| A | JP 2012 075340 A (RIKEN VITAMIN CO) 19 April 2012 (2012-04-19)<br>* paragraph [0002] *<br>* paragraph [0006] - paragraph [0010] *<br>* paragraph [0020] - paragraph [0026] *<br>* paragraph [0032] - paragraph [0048]; claims 1-4 *<br>----- | 1-19 | |
| A | JP 2017 169501 A (TAIYO KAGAKU KK) 28 September 2017 (2017-09-28)<br>* paragraph [0001] - paragraph [0002] *<br>* paragraph [0007] - paragraph [0016]; examples 1-7; table 2 *<br>* paragraph [0053] - paragraph [0054] *<br>* paragraph [0056] - paragraph [0057]; table 3 *<br>----- | 1-19 | TECHNICAL FIELDS SEARCHED (IPC) |
| A | MOHDMAIDIN NURMAHANI ET AL: "Surfactant TWEEN20 provides stabilisation effect on anthocyanins extracted from red grape pomace",<br>FOOD CHEMISTRY, ELSEVIER LTD, NL,<br>vol. 271, 30 July 2018 (2018-07-30), pages 224-231, XP085478990,<br>ISSN: 0308-8146, DOI: 10.1016/J.FOODCHEM.2018.07.083<br>* abstract *<br>* paragraph [02.2] *<br>* paragraph [4.Conclusions] *<br>-----<br>-/-- | 1-19 | |

The present search report has been drawn up for all claims

| Place of search | Date of completion of the search | Examiner |
|---|---|---|
| Munich | 13 April 2026 | Munteanu, I |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches Patentamt
European Patent Office
Office européen des brevets

# EUROPEAN SEARCH REPORT

Application Number
EP 25 21 6345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/255226 A1 (EIDENBERGER THOMAS [AT]) 16 October 2008 (2008-10-16)<br>* paragraph [0002] *<br>* paragraph [0010] - paragraph [0012] *<br>* paragraph [0013] - paragraph [0017]; claims 8-14 *<br>----- | 1-19 | |

TECHNICAL FIELDS SEARCHED (IPC)

The present search report has been drawn up for all claims

1

| Place of search | Date of completion of the search | Examiner |
|---|---|---|
| Munich | 13 April 2026 | Munteanu, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT ON EUROPEAN PATENT APPLICATION NO. EP 25 21 6345

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2026

| Patent document cited in search report | Publication date | Patent family member(s) | Publication date |
|---|---|---|---|
| CN 106343124 A | 25-01-2017 | NONE | |
| JP 7596098 B2 | 09-12-2024 | JP 7596098 B2 | 09-12-2024 |
| | | JP 2022040588 A | 11-03-2022 |
| WO 2010096597 A2 | 26-08-2010 | US 2011236550 A1 | 29-09-2011 |
| | | WO 2010096597 A2 | 26-08-2010 |
| JP 2021106508 A | 29-07-2021 | JP 7629686 B2 | 14-02-2025 |
| | | JP 2021106508 A | 29-07-2021 |
| JP 2012075340 A | 19-04-2012 | JP 5670142 B2 | 18-02-2015 |
| | | JP 2012075340 A | 19-04-2012 |
| JP 2017169501 A | 28-09-2017 | NONE | |
| US 2008255226 A1 | 16-10-2008 | CN 101778576 A | 14-07-2010 |
| | | EP 2124637 A2 | 02-12-2009 |
| | | JP 5843424 B2 | 13-01-2016 |
| | | JP 6205233 B2 | 27-09-2017 |
| | | JP 6415394 B2 | 31-10-2018 |
| | | JP 2010521449 A | 24-06-2010 |
| | | JP 2014040466 A | 06-03-2014 |
| | | JP 2015212275 A | 26-11-2015 |
| | | US 2008255226 A1 | 16-10-2008 |
| | | US 2011117221 A1 | 19-05-2011 |
| | | US 2011217286 A1 | 08-09-2011 |
| | | US 2011217418 A1 | 08-09-2011 |
| | | US 2012183661 A1 | 19-07-2012 |
| | | US 2012277173 A1 | 01-11-2012 |
| | | WO 2009031051 A2 | 12-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2022240553 A1


### Non-patent literature cited in the description


- Anthocyanins. **KAMMERER, D.R.** Handbook on Natural Pigments in Food and Beverages. Woodhead Publishing, 2016, vol. 3, 61-80
- **MONTILLA, E.C. et al.** Anthocyanin Composition of Black Carrot (Daucus carota ssp. sativus var. atrorubens Alef.) Cultivars Antonina, Beta Sweet, Deep Purple, and Purple Haze. *J. Agric. Food Chem.*, 2011, vol. 59 (7), 3385-3390
- Plant Pigments. **SUDHAKAR, P. et al.** Phenotyping Crop Plants for Physiological and Biochemical Traits. Academic Press, 2016, vol. 15, 121-127
- **SARAIVA, A** ; **CARRASCOSA, C** ; **RAHEEM, D** ; **RAMOS, F** ; **RAPOSO, A**. *International Journal of Environmental Research and Public Health*, 2020, vol. 17 (17), 6285, https://doi.org/10.3390/ijerph17176285
- **LINDBLOOM, B. J.** Delta E. *CIE*, 2000, http://www.brucelindbloom.com/index.html?Ean DeltaE_-CIE2000.html